(19) Europäisches Patentamt
European Patent Office
Office européen des brevets

(11) EP 4 495 579 A1

(12) EUROPEAN PATENT APPLICATION
published in accordance with Art. 153(4) EPC

(43) Date of publication:
22.01.2025 Bulletin 2025/04

(51) International Patent Classification (IPC):
*G01N 21/27* (2006.01)   *G01N 21/64* (2006.01)

(21) Application number: 22932134.4

(52) Cooperative Patent Classification (CPC):
G01N 21/27; G01N 21/64

(22) Date of filing: 17.03.2022

(86) International application number:
PCT/JP2022/012406

(87) International publication number:
WO 2023/175860 (21.09.2023 Gazette 2023/38)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Evident Corporation
Kamiina-gun, Nagano 399-0495 (JP)

(72) Inventors:
• SUZUKI, Yoshimasa
Tatsuno-machi, Kamiina-gun,
Nagano 399-0495 (JP)
• FUJII, Shintaro
Tatsuno-machi, Kamiina-gun,
Nagano 399-0495 (JP)

(74) Representative: Schicker, Silvia
Wuesthoff & Wuesthoff
Patentanwälte und Rechtsanwalt PartG mbB
Schweigerstraße 2
81541 München (DE)

(54) **SPECIMEN IMAGE GENERATION DEVICE, SPECIMEN IMAGE GENERATION METHOD, SPECIMEN IMAGE GENERATION SYSTEM, AND RECORDING MEDIUM**

(57)    A sample image generation device includes a memory and a processor. A first image is an image obtained by capturing an image of a sample. A predetermined direction in the first image is a direction in which a virtual observation optical system is present among optical axis directions of the virtual observation optical system. The processor acquires the first image from the memory, divides the first image into a plurality of areas, acquires a refractive index distribution of the sample from the memory, calculates a point spread function using the refractive index distribution, generates second images using the point spread function, combines the second images, and generates a third image corresponding to the first image. In the calculation process, the point spread function of a first area is calculated using the refractive index distribution of each area included in an area group. The first area is an area for which the point spread function is to be calculated. The area group is constituted of a plurality of areas inside a range in which light rays originating from the first area radiate in the predetermined direction.

FIG. 1A

FIG. 1B

FIG. 1C

EP 4 495 579 A1

## Description

Technical Field

The present disclosure relates to a sample image generation device, a sample image generation method, a sample image generation system, and a recording medium.

Background Art

For example, in microscopes and endoscopes, an optical image of a sample is formed by an optical system. An image of the optical image is acquired by capturing the optical image with an imager.

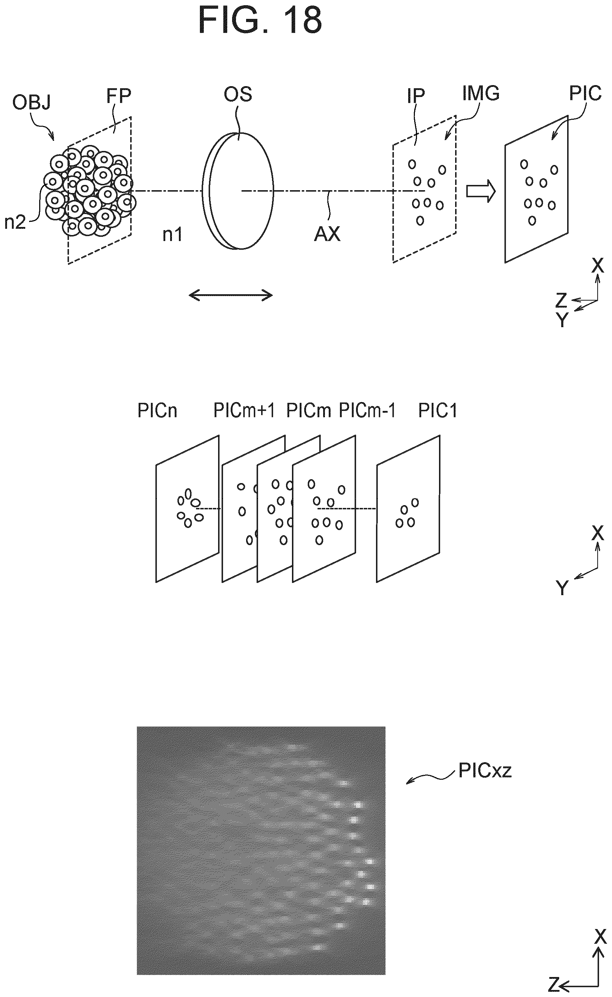

Figs. 18A, 18B, and 18C are diagrams illustrating a state of imaging, an optical image, and an image of the optical image. Fig. 18A is a diagram illustrating a state of imaging when a sample is a three-dimensional object. Fig. 18B is a diagram illustrating an image of an optical image in an XY cross-section of the sample. Fig. 18C is a diagram illustrating an image in an XZ cross-section of the optical image.

The optical system is an ideal optical system. The optical axis of the optical system is denoted as the Z axis, the axis orthogonal to the Z axis is denoted as the X axis, and the axis orthogonal to both of the Z axis and the X axis is denoted as the Y axis. The XY cross-section is a plane including the X axis and the Y axis. The XZ cross-section is a plane including the X axis and the Z axis.

The sample is a mass of cells. The mass of cells is formed of a plurality of cells. Each cell has a cell nucleus.

As illustrated in Fig. 18A, since a sample OBJ is a mass of cells, the sample OBJ has a thickness not only in a direction orthogonal to the optical axis AX but also in a direction parallel to the optical axis AX. An optical image IMG is formed on an image plane IP by an optical system OS.

In the sample OBJ, only the cell nuclei are stained with a fluorescent dye. Therefore, when the sample OBJ is irradiated with excitation light, fluorescence is emitted only from the cell nuclei. As a result, a fluorescent image of the cell nuclei is formed as the optical image IMG.

By capturing the optical image IMG, it is possible to acquire an image PIC of the optical image. In the image PIC of the optical image, only the cell nuclei are imaged.

The image plane IP is conjugate to a focal plane FP. The optical image IMG represents an optical image in the XY cross-section of the sample OBJ positioned at the focal plane FP. It is possible to acquire images of a plurality of optical images by capturing the optical images while moving the sample OBJ and the focal plane FP relative to each other along the optical axis AX as indicated by the arrow.

When the sample OBJ is fixed and the optical system OS is moved toward the sample OBJ, the focal plane FP moves in the order of the top surface of the sample OBJ, the interior of the sample OBJ, and the bottom surface of the sample OBJ.

Fig. 18B illustrates images of five optical images. Each of an image PIC1, an image PICm-1, an image PICm, an image PICm+1, and an image PICn is an image of an optical image in the XY cross-section of the sample OBJ. For example, the image PIC1 is an image of the top surface of the sample OBJ, the image PICm-1, the image PICm, and the image PICm+1 are images of the interior of the sample OBJ, and the image PICn is an image of the bottom surface of the sample OBJ.

The position of the XY cross-section in the sample OBJ differs among the images of the optical images. The images of the optical images are therefore different from each other.

A series of data parallel to the X axis is extracted from the images from the image PIC1 to the image PICn. By arranging the series of data along the Z axis, it is possible to obtain an image in the XZ cross-section of an optical image.

Fig. 18C is a diagram illustrating an image in the XZ cross-section of an optical image. An image PICxz is an image of the cell nuclei. The right-left direction of the image is a direction along the optical axis AX. The right side of the image represents the image of the top surface of the sample OBJ, and the left side of the image represents the image of the bottom surface of the sample OBJ.

When the shape of the cell nucleus is a spherical shape, the shape in the XZ cross-section is a circle. As illustrated in Fig. 18C, in the image PICxz, deformation, reduction in sharpness, and reduction in brightness occur in all of the images of the cell nuclei. If deformation, reduction in sharpness, and reduction in brightness are considered as degradation of image quality, degradation of image quality occurs in the image PICxz.

An image of an optical image is obtained by capturing an optical image. That degradation of image quality occurs in an image of an optical image means that degradation occurs in the optical image.

When the sample is a point light source, it is preferable that an optical image is a point image. In order to form a point image, it is necessary that the optical system is an optical system free from aberration (hereinafter referred to as "ideal optical system") and that all of the light emitted from the point light source is incident on the optical system.

However, since the size of the optical system is finite, it is impossible to allow all of the light emitted from the point light source to be incident on the optical system. In this case, the optical image is affected by diffraction. As a result, even when the optical system is an ideal optical system, the point image is not formed, but an image having a spread is formed. The image having a spread is called a point spread function.

The optical image is represented by the following Expression (1) using the point spread function.

$$I = O*PSF \qquad (1)$$

where

I is the optical image,
O is the sample,
PSF is the point spread function, and
* is convolution.

When the point spread function is considered as an optical filter, Expression (1) represents that the optical image is obtained through a filter that is the point spread function. That degradation occurs in the optical image means that the filter, that is, the point spread function, has characteristics that cause deformation, reduction in sharpness, and reduction in brightness (hereinafter referred to as "degradation characteristics").

In a frequency space, Expression (1) is represented by the following Expression (2).

$$FI = FO \times OTF \qquad (2)$$

where

FI is the Fourier transform of the optical image,
FO is the Fourier transform of the sample, and
OTF is the optical transfer function.

OTF is the Fourier transform of the point spread function. When the point spread function has degradation characteristics, OTF also has degradation characteristics.

Expression (2) is rewritten and then Expression (2) is represented by the following Expression (3).

$$FO = FI/OTF \qquad (3)$$

If it is possible to obtain FI and OTF, it is possible to obtain FO. Then, it is possible to obtain O by the inverse Fourier transform of FO. O is the sample. This computation is called deconvolution.

The image PICxz illustrated in Fig. 18C is an image of an optical image of cell nuclei. In the image PICxz, only the cell nuclei are imaged. Only the images of the cell nuclei are therefore obtained by performing deconvolution using the image PICxz and the OTF image.

The sample OBJ is a mass of cells and thus includes a plurality of pieces of cytoplasm and a plurality of cell nuclei. However, in the image PICxz, only the images of the cell nuclei are obtained even by performing deconvolution. Since an image of the cytoplasm is not obtained, it is difficult to say that the sample OBJ has been obtained. Although the sample can be obtained by performing deconvolution, whether the sample is obtained depends on the image of the optical image.

In terms of an image, Expression (1) represents that the image of the optical image is an image obtained through the filter that is the point spread function. If the point spread function has degradation characteristics, I can be considered as an image of an optical image with degraded image quality, and O can be considered as an image of an optical image before image quality is degraded.

In this case, Expression (3) represents that an image of an optical image before image quality is degraded is generated from an image of an optical image with degraded image quality. Hereinafter, an image of an optical image with degraded image quality is referred to as a "degraded image". Furthermore, it is possible to say that an image of an optical image before image quality is degraded means that an image has been restored in the image with degraded image quality. Thus, an image of an optical image before image quality is degraded is referred to as a "restored image".

In order to generate a restored image, it is necessary to obtain a point spread function. This will be explained with reference to Fig. 18A. In Fig. 18A, the refractive index outside the sample OBJ is denoted as n1 and the refractive index inside the sample OBJ is denoted as n2.

It is assumed that an ideal shape is the shape of the point spread function of the ideal optical system. In the ideal shape, the refractive index between the focal plane and the ideal optical system agrees with a predetermined refractive index.

The sample OBJ is moved toward the optical system OS from a state in which the sample OBJ is at a distance from the focal plane FP. Since the optical system OS does not move, the top surface of the sample OBJ reaches the focal plane FP. In this state (hereinafter referred to as "first state"), only a space with a refractive index of n1 exists between the focal plane FP and the optical system OS. When a point light source is disposed on the focal plane FP, the point spread function in the first state is obtained.

In the first state, the refractive index between the focal plane FP and the optical system OS is n1. If the predetermined refractive index is n1, the point spread function in the first state is obtained only based on the predetermined refractive index. Thus, the shape of the point spread function in the first state is the same as the ideal shape.

When the sample OBJ is moved further, the focal plane FP reaches the interior of the sample OBJ. In this state (hereinafter referred to as "second state"), a space with a refractive index of n1 and a space with a refractive index of n2 are positioned between the focal plane FP and the optical system OS. When a point light source is disposed on the focal plane FP, the point spread function in the second state is obtained.

In the second state, the refractive index between the focal plane FP and the optical system OS is determined by n1 and n2. Since the predetermined refractive index is n1, n2 is not a predetermined refractive index. In this case, the point spread function in the second state is obtained based on the predetermined refractive index and the refractive index that is not predetermined. Thus, the shape of the point spread function in the second state is different from the ideal shape.

In this way, the shape of the point spread function varies with the size of the space with a refractive index of n2. Thus, in calculation of the point spread function, the refractive index distribution in the sample OBJ has to be considered appropriately.

A technique for restoring images is disclosed in Non-Patent Literature 1. In this restoration technique, an image of an optical image acquired from a thick sample and a point spread function are used. In calculation of the point spread function, the sample is divided into a plurality of blocks, and the refractive indexes of a row of blocks parallel to the optical axis are used.

Citation List

Non-Patent Literature

Non-Patent Literature 1: Sreya Ghosh, Chrysanthe Preza, "Three-dimensional block-based restoration integrated with wide-field fluorescence microscopy for the investigation of thick specimens with spatially variant refractive index", J. of Biomedical Optics, 21(4), 046010 (2016).

SUMMARY OF THE INVENTION

Technical Problem

In calculation of the point spread function, a point light source is disposed in one block, and a wavefront emitted from the sample is obtained. The wavefront emitted from the point light source is a spherical wave. The wavefront therefore propagates through a row of blocks in contact with the block in which the point light source is disposed and parallel to the optical axis, and through blocks positioned in the periphery of the row of blocks.

In the restoration technique described above, the point spread function is calculated using only the refractive indexes of a row of blocks. In this case, the point spread function is not accurately calculated. Therefore, it cannot be said that the image is restored with high accuracy.

The present disclosure is made in view of such a problem and is aimed to provide a sample image generation device, a sample image generation method, a sample image generation system, and a recording medium that are capable of restoring an image with high accuracy.

Solution to Problem

In order to solve the above problem and achieve the object, a sample image generation device according to at least some embodiments of the present disclosure includes a memory and a processor, in which

a first image is an image obtained by capturing an image of a sample,
a predetermined direction in the first image is a direction in which a virtual observation optical system is present among optical axis directions of the virtual observation optical system,
the processor

performs a first acquisition process of acquiring the first image from the memory,

performs a division process of dividing the acquired first image into a plurality of areas,

performs a second acquisition process of acquiring a refractive index distribution of the sample from the memory,

performs a calculation process of calculating respective point spread functions for the divided areas, using the acquired refractive index distribution,

performs a first generation process of generating respective second images corresponding to the areas, using the respective point spread functions calculated for the areas, and

combines the respective second images corresponding to the areas and generates a third image corresponding to the first image,

in the calculation process, the point spread function of a first area is calculated using a refractive index distribution of each of areas included in an area group,

the first area is an area for which the point spread function is to be calculated, and

the area group is constituted of a plurality of areas inside a range in which light rays originating from the first area radiate in the predetermined direction, and includes an area outside a range defined by extending the first area in the predetermined direction.

Furthermore, a sample image generation system according to at least some embodiments of the present disclosure includes:

an observation optical system configured to form an optical image of a sample;

an imager configured to capture the optical image; and

the sample image generation device described above.

Furthermore, a sample image generation system according to at least some embodiments of the present disclosure includes a memory and a processor, in which

a first image is an image obtained by capturing an image of a sample,

a predetermined direction in the first image is a direction in which a virtual observation optical system is present among optical axis directions of the virtual observation optical system,

the processor

performs a first acquisition process of acquiring the first image from the memory,

performs a division process of dividing the acquired first image into a plurality of areas,

performs a second acquisition process of acquiring a refractive index distribution of the sample from the memory,

performs a calculation process of calculating respective point spread functions for the divided areas, using the acquired refractive index distribution,

performs a first generation process of generating respective second images corresponding to the areas, using the respective point spread functions calculated for the areas, and

combines the respective second images corresponding to the areas and generates a third image corresponding to the first image,

in the calculation process, the point spread function of a first area is calculated using a refractive index distribution of each of areas included in an area group,

the first area is an area for which the point spread function is to be calculated,

the area group is constituted of a plurality of areas inside a range in which light rays originating from the first area radiate in the predetermined direction, and includes an area outside a range defined by extending the first area in the predetermined direction,

the processor performs a machine learning process to train an AI model,

in the machine learning process, the AI model is trained with a plurality of data sets,

the data sets include the first image and training data corresponding to the first image, and

the training data corresponding to the first image is the second images corresponding to the first image.

Furthermore, a sample image generation method according to at least some embodiments of the present disclosure is a sample image generation method using a first image and a refractive index distribution of a sample.

The first image is an image obtained by capturing an image of the sample.

A predetermined direction in the first image is a direction in which a virtual observation optical system is present among optical axis directions of the virtual observation optical system.

The sample image generation method includes:

performing a first acquisition process of acquiring the first image from a memory;
performing a division process of dividing the acquired first image into a plurality of areas;
performing a second acquisition process of acquiring a refractive index distribution of the sample from the memory;
performing a calculation process of calculating respective point spread functions for the divided areas, using the acquired refractive index distribution;
performing a first generation process of generating respective second images corresponding to the areas, using the respective point spread functions calculated for the areas; and
combining the respective second images corresponding to the areas and generating a third image corresponding to the first image.

In the calculation process, the point spread function of a first area is calculated using a refractive index distribution of each of areas included in an area group.

The first area is an area for which the point spread function is to be calculated.

The area group is constituted of a plurality of areas inside a range in which light rays originating from the first area radiate in the predetermined direction, and includes an area outside a range defined by extending the first area in the predetermined direction.

Furthermore, a recording medium according to at least some embodiments of the present disclosure is a computer-readable recording medium encoded with a program for generating a sample image.

A first image is an image obtained by capturing an image of a sample.

A predetermined direction in the first image is a direction in which a virtual observation optical system is present among optical axis directions of the virtual observation optical system.

The program causes a computer to perform processing including:

a first acquisition process of acquiring the first image from a memory;
a division process of dividing the acquired first image into a plurality of areas;
a second acquisition process of acquiring a refractive index distribution of the sample from the memory;
a calculation process of calculating respective point spread functions for the divided areas, using the acquired refractive index distribution;
a first generation process of generating respective second images corresponding to the areas, using the respective point spread functions calculated for the areas; and
a process of combining the respective second images corresponding to the areas and generating a third image corresponding to the first image.

In the calculation process, the point spread function of a first area is calculated using a refractive index distribution of each of areas included in an area group.

The first area is an area for which the point spread function is to be calculated.

The area group is constituted of a plurality of areas inside a range in which light rays originating from the first area radiate in the predetermined direction, and includes an area outside a range defined by extending the first area in the predetermined direction.

Advantageous Effects of Invention

The present disclosure can provide a sample image generation device, a sample image generation method, a sample image generation system, and a recording medium that are capable of restoring an image with high accuracy.

BRIEF DESCRIPTION OF THE DRAWING

Figs. 1A, 1B, and 1C are diagrams illustrating a sample image generation device of the present embodiment, a microscope system, and an estimation system;
Figs. 2A, 2B, 2C, 2D, and 2E are diagrams illustrating a sample, optical images, images of the optical images, and an XY image group;
Fig. 3 is a flowchart of processing performed by a processor;
Figs. 4A, 4B, 4C, and 4D are diagrams illustrating samples, optical images, and a first image;
Figs. 5A, 5B, and 5C are diagrams illustrating the first image, a refractive index image, a first area, and an area group;

Figs. 6A and 6B are diagrams illustrating area groups;
Figs. 7A and 7B are diagrams illustrating the first image, the refractive index image, and a PSF image;
Figs. 8A and 8B are diagrams illustrating the first image, a second image, and a third image;
Figs. 9A and 9B are diagrams illustrating a first image and a third image;
Fig. 10 is a diagram illustrating propagation of a wavefront;
Figs. 11A and 11B are diagrams illustrating the refractive index image;
Figs. 12A and 12B are diagrams illustrating the refractive index image;
Figs. 13A and 13B are diagrams illustrating a refractive index image;
Fig. 14 is a flowchart of a calculation process;
Fig. 15 is a diagram illustrating a predetermined intensity distribution and transmission characteristics of a pinhole;
Fig. 16 is a diagram illustrating a training process;
Figs. 17A, 17B, and 17C are diagrams illustrating sample image generation systems of the present embodiment; and
Figs. 18A, 18B, and 18C are diagrams illustrating a state of imaging, an optical image, and an image of the optical image.

Description of Embodiments

Prior to a description of examples, the operation effects of embodiments according to some aspects of the present disclosure will be described. In specific description of the operation effects of the present embodiment, the description will be given with specific examples. However, these aspects described by way of example are only some of the aspects included in the present disclosure and there are numerous variations of the aspects, as in the examples described below. Therefore, the present disclosure is not limited to the aspects described by way of example.

In a sample image generation device of the present embodiment, an image of an optical image of a sample is used. It is possible to acquire an image of an optical image of a sample by forming an optical image of the sample by an observation optical system and capturing the optical image of the sample by an imager.

Since the sample is a three-dimensional object, it is possible to represent the image of the optical image of the sample by an XY image, an XZ image, and a YZ image. Furthermore, since the image of the optical image of the sample is acquired through the observation optical system, the image of the optical image of the sample is a degraded image.

The optical axis of the observation optical system is denoted as the Z axis, the axis orthogonal to the Z axis is denoted as the X axis, and the axis orthogonal to both of the Z axis and the X axis is denoted as the Y axis. The XY cross-section is a plane including the X axis and the Y axis. The XY image is an image in the XY cross-section. The XZ cross-section is a plane including the X axis and the Z axis. The XZ image is an image in the XZ cross-section. The YZ cross-section is a plane including the Y axis and the Z axis. The YZ image is an image in the YZ cross-section.

A sample image generation device of the present embodiment includes a memory and a processor. The processor performs a first acquisition process of acquiring a first image from the memory, performs a division process of dividing the acquired first image into a plurality of areas, performs a second acquisition process of acquiring a refractive index distribution of a sample from the memory, performs a calculation process of calculating respective point spread functions for the divided areas, using the acquired refractive index distribution, performs a first generation process of generating respective second images corresponding to the areas, using the respective point spread functions calculated for the areas, and combines the respective second images corresponding to the areas and generates a third image corresponding to the first image. In the calculation process, the point spread function of a first area is calculated using the refractive index distribution of each area included in an area group. The first image is an image obtained by capturing an image of the sample. A predetermined direction in the first image is a direction in which a virtual observation optical system is present among optical axis directions of the virtual observation optical system. The first area is an area for which the point spread function is to be calculated. The area group is constituted of a plurality of areas inside a range in which light rays originating from the first area radiate in the predetermined direction, and includes an area outside a range defined by extending the first area in the predetermined direction.

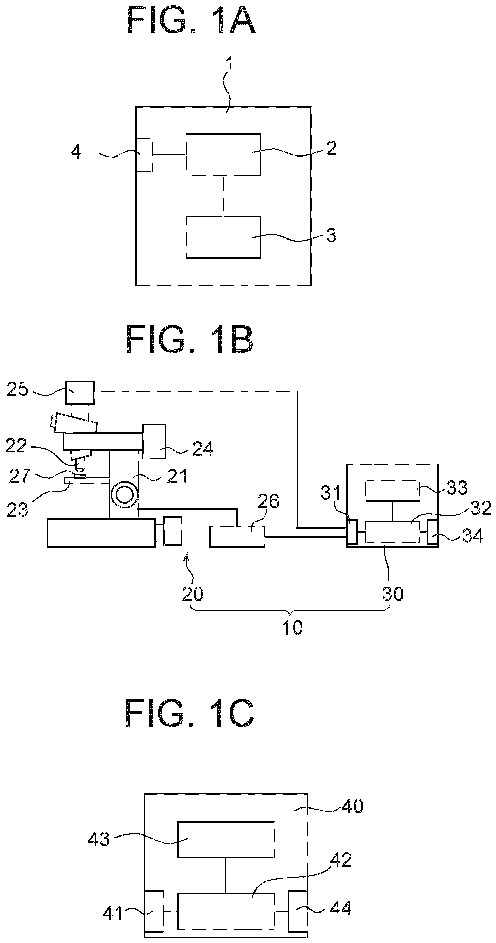

Figs. 1A, 1B, and 1C are diagrams illustrating the sample image generation device of the present embodiment, a microscope system, and an estimation system. Fig. 1A is a diagram illustrating the sample image generation device of the present embodiment. Fig. 1B is a diagram illustrating the microscope system. Fig. 1C is a diagram illustrating the estimation system.

As illustrated in Fig. 1A, a sample image generation device 1 includes a memory 2 and a processor 3. A first image and a refractive index distribution of a sample are stored in the memory 2.

The first image is an image obtained by capturing an image of a sample. For example, it is possible to generate the first image from a plurality of XY images (hereinafter referred to as "XY image group"). Each of the XY images in the XY image group is an image of an optical image of the sample. As described above, the image of the optical image of the sample is a degraded image. Thus, the first image is also a degraded image.

A process of generating a sample image is performed by the processor 3. In this process, the first image and the refractive index distribution of the sample are used. Since the first image is a degraded image, the sample image is a restored image. Thus, in the processor 3, a process of generating a sample image from the degraded image is performed.

In order to generate the first image in the sample image generation device 1, it is necessary to input the XY image group to the sample image generation device 1. The input of the XY image group to the sample image generation device 1 is performed through an input unit 4. It is possible to acquire the XY images, for example, by a microscope system.

As illustrated in Fig. 1B, a microscope system 10 includes a microscope 20 and a processing device 30. The microscope 20 includes a main body 21, an objective lens 22, a stage 23, a reflection illumination device 24, an imaging unit 25, and a controller 26. The processing device 30 includes an input unit 31, a memory 32, a processor 33, and an output unit 34.

A sample 27 is placed on the stage 23. In the microscope 20, an optical image of the sample 27 is formed on an image plane of an observation optical system. When a lens is disposed in the imaging unit 25, the objective lens 22, an imaging lens, and the lens of the imaging unit 25 form the observation optical system. When no lens is disposed in the imaging unit 25, the objective lens 22 and an imaging lens form the observation optical system.

The imaging unit 25 includes an imager. The optical image formed on the image plane is captured by the imager whereby the image of the optical image is acquired. The optical image formed on the image plane is an optical image of an XY cross-section of the sample 27. Thus, the image of the optical image is an XY image.

The objective lens 22 and the stage 23 can be moved relative to each other along the optical axis of the observation optical system. It is possible to perform the movement of the objective lens 22 or the movement of the stage 23 by the controller 26. The sample 27 is a thick sample. Thus, by moving the objective lens 22 and the stage 23 relative to each other, it is possible to acquire XY images for a plurality of cross-sections. The XY image group will now be described.

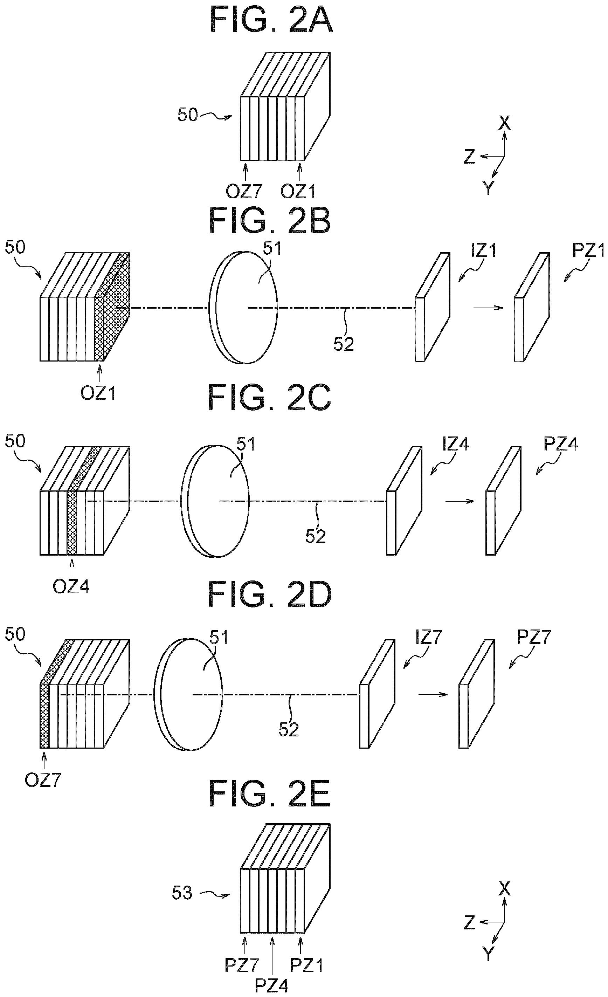

Figs. 2A, 2B, 2C, 2D, and 2E are diagrams illustrating a sample, optical images, images of the optical images, and an XY image group. Fig. 2A is a diagram illustrating a sample. Figs. 2B, 2C, and 2D are diagrams illustrating optical images and images of the optical images. Fig. 2E is a diagram illustrating an XY image group.

As illustrated in Fig. 2A, since a sample 50 is a three-dimensional object, it is possible to represent the sample 50 by a plurality of block layers. In Fig. 2A, the sample 50 is divided into seven block layers in the Z-axis direction. However, the number of block layers is not limited to seven. A sample OZ1 represents a block layer at one end, and a sample OZ7 represents a block layer at the other end. Each block layer represents an XY cross-section of the sample 50.

In formation of an optical image of the sample 50, the block layers from the sample OZ1 to the sample OZ7 are positioned sequentially in the focal plane of an observation optical system 51. Although the optical image is flat, the optical image is represented by a block layer for the sake of visibility. Furthermore, since the optical image is represented by a block layer, the image of the optical image is also represented by a block layer.

In formation of an optical image of the sample 50, the sample 50 and the observation optical system 51 are moved relative to each other along an optical axis 52. Here, the sample 50 is not moved, whereas the observation optical system 51 is moved relative to the sample 50 along the optical axis 52.

As illustrated in Fig. 2B, when the sample OZ1 is positioned at the focal plane of the observation optical system 51, an optical image IZ1 is formed. The optical image IZ1 is captured by the imager whereby an image PZ1 of the optical image is acquired.

As illustrated in Fig. 2C, when the sample OZ4 is positioned at the focal plane of the observation optical system 51, an optical image IZ4 is formed. The optical image IZ4 is captured by the imager whereby an image PZ4 of the optical image is acquired.

As illustrated in Fig. 2D, when the sample OZ7 is positioned at the focal plane of the observation optical system 51, an optical image IZ7 is formed. The optical image IZ7 is captured by the imager whereby an image PZ7 of the optical image is acquired.

The images PZ1, PZ4 and PZ7 are XY images. Two block layers are positioned between the images PZ1 and PZ4. Furthermore, two block layers are also positioned between the images PZ4 and PZ7. When the images of these block layers are denoted as an image PZ2, an image PZ3, an image PZ5, and an image PZ6, the image PZ2, the image PZ3, the image PZ5, and the image PZ6 are also XY images.

Since all of the images from the image PZ1 to the image PZ7 are XY images, it is possible to obtain an XY image group from these images. Furthermore, by stacking these images in the direction of the optical axis 52, it is possible to obtain a three-dimensional XY image group.

Fig. 2E illustrates a three-dimensional XY image group 53. The XY image group 53 has information on brightness in each of the X-axis direction, the Y-axis direction, and the Z-axis direction. Thus, it is possible to generate an XY image, an XZ image, and a YZ image from the XY image group 53.

As described above, the first image is generated from the XY image group. Thus, it is possible to use any of the XY image, the XZ image, and the YZ image as the first image.

Returning to Fig. 1B, the description continues. In the microscope 20, it is possible to mount a plurality of objective lenses on a revolver. By rotating the revolver, it is possible to change the magnification of the objective lens. It is possible to perform the rotation of the revolver by the controller 26.

The XY images are output from the imaging unit 25 and input to the processing device 30. Optical information, movement information, and microscope information (hereinafter referred to as "various information") are output from the controller 26 and input to the processing device 30.

The optical information is, for example, information on the magnification of the objective lens and information on the numerical aperture of the objective lens. The movement information is, for example, information on the amount of stage movement per time and information on the number of times the stage is moved, or information on the amount of objective lens movement per time and information on the number of times the objective lens is moved.

The microscope information is information on the microscope used to acquire the XY images. The types of microscopes that can be used to acquire the XY images are, for example, fluorescence microscopes, scanning laser microscopes (hereinafter referred to as "LSM"), two-photon microscopes, sheet illumination microscopes, and luminescence microscopes.

The XY images and the various information are input to the input unit 31 and then stored in the memory 32. An XY image group is obtained from a plurality of XY images. The XY image group and various information are output from the output unit 34. Thus, it is possible to input the XY image group and the various information to the sample image generation device 1. The XY image group and the various information are stored in the memory 2.

It is necessary to associate the XY image group with the various information. The association of the XY image group with the various information may be performed by either the processing device 30 or the sample image generation device 1.

It is possible to input the XY image group and the various information in a wired or wireless manner. Furthermore, the XY image group and the various information may be recorded on a recording medium by the processing device 30. In this case, the XY image group and the various information are input to the sample image generation device 1 through a recording medium.

As described above, the first image and the refractive index distribution of the sample are used in the processing performed by the processor 3. It is possible to generate the XY image group required to generate the first image, by the microscope system 20. It is possible to generate the refractive index distribution of the sample, for example, by an estimation device.

As illustrated in Fig. 1C, an estimation device 40 includes an input unit 41, a memory 42, a processor 43, and an output unit 44. In the estimation device 40, the refractive index distribution of the sample is estimated by computational imaging or deep learning estimation.

The estimation of the refractive distribution by computational imaging will now be described. In estimation, an optical image of a sample and an optical image of an estimation sample are used. It is possible to acquire the optical image of the estimation sample by simulation using a virtual optical system. Since the sample is a three-dimensional object, the estimation sample is also a three-dimensional object. In this case, the optical image of the estimation sample is represented by a plurality of estimation XY images (hereinafter referred to as "estimation XY image group").

It is possible to represent the refractive index distribution by an image. In this case, it is possible to represent the refractive index distribution of the sample by a plurality of distribution images (hereinafter referred to as "distribution image group"). It is possible to represent the refractive index distribution of the estimation sample by a plurality of estimation distribution images (hereinafter referred to as "estimation distribution image group"). The distribution image and the estimation distribution image are images of the refractive index distribution in the XY cross-section in the same manner as in the XY image.

As described above, the optical image of the sample is used in the estimation. Thus, in the estimation device 40, the XY image group and the various information are input through the input unit 41. The XY image group and the various information are stored in the memory 42.

In the processor 43, the estimation of the estimation distribution image group is performed by computational imaging. In the estimation, the XY image group is compared with the estimation XY image group. Specifically, the value of the refractive index in the estimation distribution image group is changed so that the difference between the XY image group and the estimation XY image group is reduced.

It is possible to represent the difference between two images by a numerical value. Thus, the comparison between two images and the changing of the value of the refractive index are repeated until this numerical value becomes smaller than a threshold. Then, the estimation distribution image group when this numerical value becomes smaller than the threshold is set as a distribution image group. The distribution image group represents the refractive index distribution of the sample. Thus, the refractive index distribution of the sample is obtained. The distribution image group is output from the output unit 44.

It is possible to input the distribution image group from the estimation device 40 to the sample image generation device 1 in a wired or wireless manner. Alternatively, the distribution image group may be recorded on a recording medium by the estimation device 40 and input to the sample image generation device 1 through the recording medium. The distribution image group represents the refractive index distribution of the sample. Thus, it is possible to input the refractive index distribution of the sample to the sample image generation device 1. The distribution image group is stored in the memory 2.

In the sample image generation device 1, the process of generating a sample image is performed. The process of generating a sample image is performed by the processor 3. The processing performed by the processor 3 will now be described.

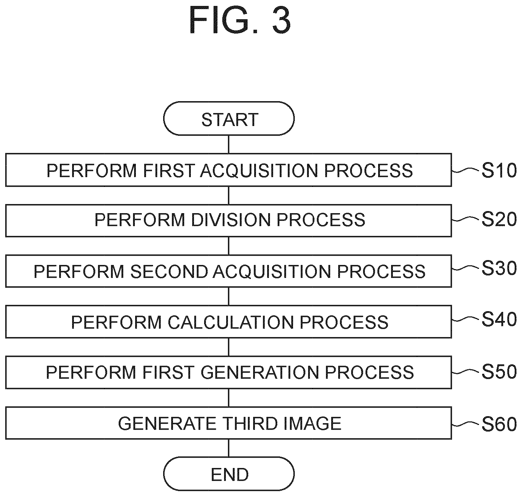

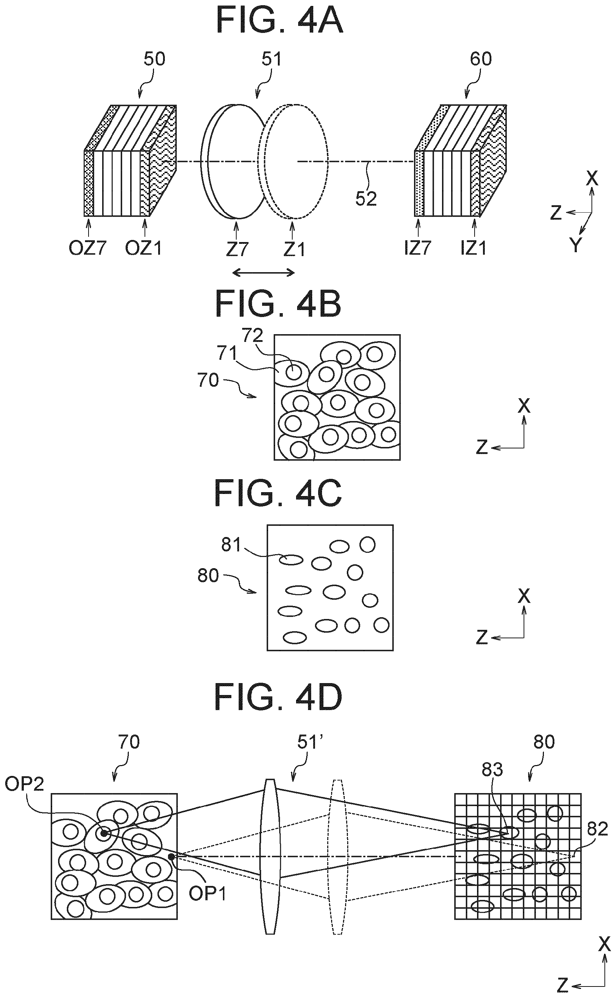

Fig. 3 is a flowchart of the processing performed by the processor. Figs. 4A, 4B, 4C, and 4D are diagrams illustrating samples, optical images, and a first image. Fig. 4A is a diagram illustrating the sample and the optical images in three dimensions. Fig. 4B is a diagram illustrating an XZ cross-section of a sample. Fig. 4C is a diagram illustrating a first image. Fig. 4D is a diagram illustrating an XZ cross-section of a sample and a first image. The same component as that in Fig. 2A is denoted by the same numeral and a description thereof is omitted.

As described above, the first image is generated from the XY image group. The XY image group is obtained from a plurality of optical images. As illustrated in Fig. 4A, when the observation optical system 51 is moved along the optical axis 52 without moving the sample 50, a plurality of optical images are formed.

At a position Z1, the optical image IZ1 of the sample OZ1 is formed. At a position Z7, the optical image IZ7 of the sample OZ7 is formed. The optical images from the optical image IZ1 to the optical image IZ7 form an optical image 60. By capturing the optical image 60, it is possible to acquire the XY image group.

It is possible to generate an XY image, an XZ image, and a YZ image from the XY image group. It is possible to use any of the XY image, the XZ image, and the YZ image as the first image. It is assumed that the XZ image is stored as the first image in the memory.

At step S10, a first acquisition process is performed. In the first acquisition process, the first image is acquired from the memory.

The first image is an image of an optical image in an XZ cross-section of a sample. Fig. 4B illustrates an XZ cross-section of a sample 70. The sample 70 is a mass of cells. The mass of cells is formed of a plurality of cells. Each cell of the sample 70 includes cytoplasm 71 and a cell nucleus 72.

Fig. 4C illustrates a first image acquired from the memory. A first image 80 is an image of a fluorescent image. In the sample 70, only the cell nuclei 72 are stained with fluorescence. In this case, only the optical images of the cell nuclei 72 are formed. Thus, the first image 80 includes only images 81 of the cell nuclei.

Since the first image 80 is an image of an optical image, the first image 80 is a degraded image. If the shape of the cell nucleus is a circle, the image 81 of the cell nucleus has an oval shape. Upon completion of step S10, step S20 is performed.

At step S20, a division process is performed. In the division process, the acquired first image is divided into a plurality of areas. As illustrated in Fig. 4D, the first image 80 is divided into 11 areas in both of the X-axis direction and the Z-axis direction.

In Fig. 4D, an observation optical system and light rays are illustrated for convenience in order to illustrate the correspondence between the sample 70 and the first image 80. An observation optical system 51' is a virtual optical system and has the same optical specifications as those of the observation optical system 51.

In optical imaging, the top and bottom of the optical image of the sample is the inverse of the top and bottom of the sample. Since the first image 80 is an image, the top and bottom can be reversed when the first image 80 is generated. Thus, in Fig. 4D, the top and bottom of the sample 70 agrees with the top and bottom of the first image 80.

The position of an area 82 corresponds to a.position OP1. The position of an area 83 corresponds to a position OP2. Upon completion of step S20, step S30 is performed.

At step S30, a second acquisition process is performed. In the second acquisition process, the refractive index distribution of the sample is acquired from the memory. The acquisition of the refractive index distribution will be described later. Upon completion of step S30, step S40 is performed.

At step S40, a calculation process is performed. In the calculation process, respective point spread functions are calculated for the divided areas, using the acquired refractive index distribution. Specifically, the point spread function of a first area is calculated using the refractive index distribution of each area included in an area group. Thus, it is necessary to determine the first area and the area group.

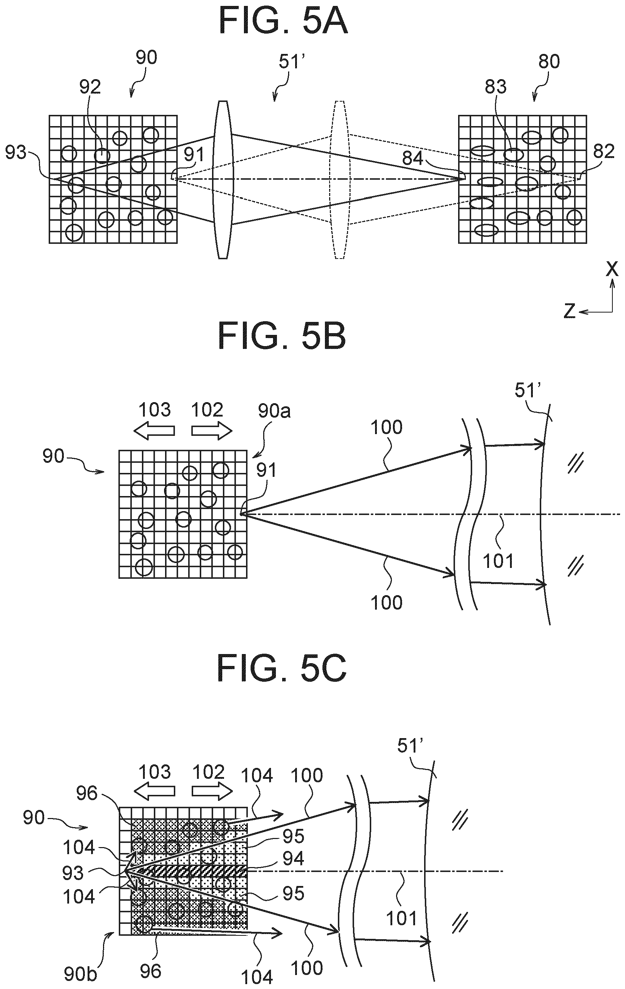

Figs. 5A, 5B, and 5C are diagrams illustrating the first image, a refractive index image, a first area, and an area group. Fig. 5A is a diagram illustrating the first image, a refractive index image, and a first area. Fig. 5B is a diagram illustrating a first example of an area group. Fig. 5C is a diagram illustrating a second example of the area group.

The first area is the area for which the point spread function is to be calculated. At step S20, the first image 80 is divided into a plurality of areas. Thus, the first area and the area group are determined by the areas in the first image 80.

Note that the first image 80 is the image of the optical image of the sample. The image of the optical image of the sample has information on brightness but does not have information on the refractive index distribution. Since the point spread function is calculated using the refractive index distribution of the area group, the first image 80 is not suitable for calculating the point spread function. In the first image 80, it is possible to determine the first area but it is impossible to determine the area group.

As described above, the distribution image group represents the refractive index distribution of the sample. Thus, an image corresponding to the first image (hereinafter referred to as "refractive index image") is acquired from the distribution image group. The point spread function is calculated using the refractive index distribution. Since the refractive index image is the image of the refractive index distribution, the refractive index image is suitable for calculating the point spread function.

The refractive index image is stored in the memory 2 so that the refractive index image can be read from the memory 2 when the calculation process is performed. Since the first image is an XZ image, the refractive index image is an image of the XZ cross-section.

The first image 80 is divided into a plurality of areas. Thus, as illustrated in Fig. 5A, a refractive index image 90 is also divided into a plurality of areas. The refractive index image 90 is divided into 11 areas in both of the X-axis direction and the Z-axis direction. In the refractive index image 90, only the cell nuclei are illustrated for the sake of visibility.

The top and bottom of the refractive index image 90 agrees with the top and bottom of the first image 80 in the same manner as in Fig. 4D. Furthermore, the observation optical system 51' and light rays are illustrated for convenience in order to illustrate the correspondence between the refractive index image 90 and the first image 80.

In the refractive index image 90, the area corresponding to the area 82 is an area 91. The area corresponding to the area 83 is an area 92. The area corresponding to an area 84 is an area 93.

As described above, the refractive index image 90 is suitable for calculating the point spread function. Thus, the first area and the area group are determined in the refractive index image 90.

A first example of the area group will now be described. Fig. 5B illustrates the area 91, the observation optical system 51', light rays 100, and an optical axis 101 of the observation optical system. Since no light rays radiate from the image, the light rays 100 are virtual light rays.

In the first example, the first area in the first image 80 is the area 82. The area corresponding to the area 82 is the area 91 in the refractive index image 90. Thus, in the refractive index image 90, the area 91 is the first area.

The area group and a predetermined direction are defined as follows. The area group is constituted of a plurality of areas inside the range in which light rays originating from the first area radiate in the predetermined direction, and includes an area outside the range defined by extending the first area in the predetermined direction. The predetermined direction in the first image is a direction in which the observation optical system is present among the optical axis directions of the virtual observation optical system.

As described above, the first area and the area group are determined in the refractive index image 90. Then, in the above definition, the first image is replaced by the refractive index image. In this case, the area group and the predetermined direction are defined as follows.

In the refractive index image, the area group is constituted of a plurality of areas inside the range in which light rays originating from the first area radiate in the predetermined direction, and includes an area outside the range defined by extending the first area in the predetermined direction. The predetermined direction in the refractive index image is a direction in which the virtual observation optical system is present among the optical axis directions of the observation optical system.

In the refractive index image 90, it is assumed that the side closer to the observation optical system 51' is the top surface side of the sample and the side farther from the observation optical system 51' is the bottom surface side of the sample. The area 91 is positioned at the intersection with the optical axis 101 on a top surface 90a. The light rays 100 radiate from the area 91. The light rays 100 radiating from the area 91 are incident on the observation optical system 51'.

The light rays 100 are light incident on the observation optical system 51'. The light incident on the observation optical system 51' is determined by the object-side numerical aperture of the observation optical system 51'. As described above, in the sample image generation device 1, optical information is stored in the memory 2.

The optical information has information on the numerical aperture of the objective lens. The numerical aperture of the objective lens can be considered as the object-side numerical aperture of the observation optical system 51'. Thus, it is possible to identify the light rays 100 from the numerical aperture of the objective lens.

Fig. 5B illustrates a predetermined direction 102 and a non-predetermined direction 103. The predetermined direction 102 and the non-predetermined direction 103 are the optical axis directions of the observation optical system 51'. Among the optical axis directions of the observation optical system 51', the observation optical system 51' is positioned in the predetermined direction 102, but the observation optical system 51' is not positioned in the non-predetermined direction 103.

Two light rays 100 are light rays of radiation light radiating from the area 91. No area of the refractive index image 90 is positioned inside the range sandwiched between the two light rays 100. Thus, at the position of the area 91, the number of areas in the area group is zero.

A second example of the area group will now be described. Fig. 5C illustrates the area 93, a central area 94, a peripheral area 95, and a peripheral area 96. The same component as that in Fig. 5B is denoted by the same numeral and a description thereof is omitted.

In the second example, the first area in the first image 80 is the area 84. The area corresponding to the area 84 is the area 93 in the refractive index image 90. Thus, in the refractive index image 90, the area 93 is the first area.

The area 93 is positioned at the intersection with the optical axis 101 on a bottom surface 90b. Light rays 100 and light rays 104 radiate from the area 93. The light rays 100 and the light rays 104 radiating from the area 93 are incident on the observation optical system 51'. The light rays 104 are virtual light rays.

The two light rays 100 and the two light rays 104 are light rays radiating from the area 93. When the scattering of light in the sample is very small, light rays radiating from the area 93 are represented by the two light rays 100. The central area 94 and the peripheral area 95 are positioned inside the range sandwiched between the two light rays 100. The central area 94 and the peripheral area 95 form an area group. Areas that intersect with the light rays 100 are considered as being included in the area group.

The central area 94 and the peripheral area 95 are each constituted of a plurality of areas. Thus, the area group is constituted of a plurality of areas.

In the area group, the central area 94 is positioned in a range defined by extending the area 93 in the predetermined direction 102. The peripheral area 95 is positioned outside the central area 94.

When the scattering of light in the sample is very large, light rays radiating from the area 93 are represented by the two light rays 104. The central area 94, the peripheral area 95, and the peripheral area 96 are positioned inside the range sandwiched between the two light rays 104. Thus, the area 94, the peripheral area 95, and the peripheral area 96 form an area group. Areas that intersect with the light rays 104 are considered as being included in the area group.

The central area 94, the peripheral area 95, and the peripheral area 96 are each constituted of a plurality of areas. Thus, the area group is constituted of a plurality of areas.

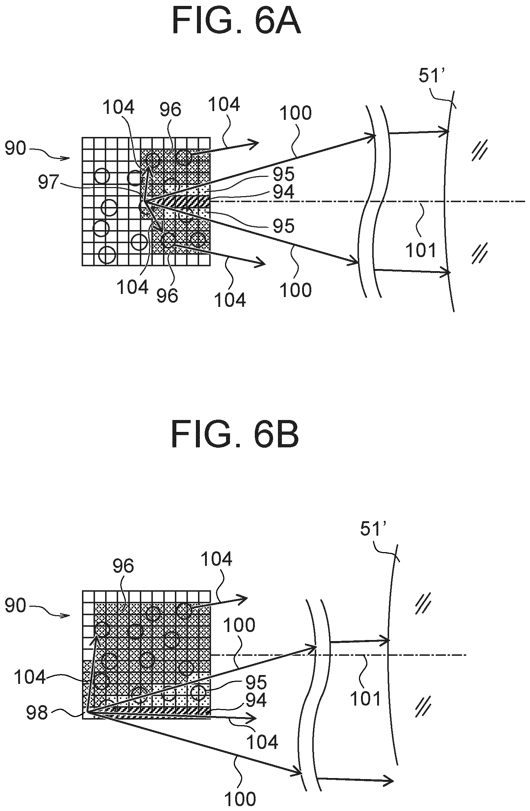

Figs. 6A and 6B are diagrams illustrating area groups. Fig. 6A is a diagram illustrating a third example of the area group. Fig. 6B is a diagram illustrating a fourth example of the area group.

In the third example, an area 97 is the first area, as illustrated in Fig. 6A. The area 97 is positioned at the intersection with the optical axis 101 between the top surface and the bottom surface.

When the scattering of light in the sample is very small, light rays radiating from the area 97 are represented by two light rays 100. The central area 94 and the peripheral area 95 are positioned inside the range sandwiched between the two light rays 100. The central area 94 and the peripheral area 95 form an area group. When the third example is compared with the second example, the third example has a fewer number of areas in the area group.

When the scattering of light in the sample is very large, light rays radiating from the area 97 are represented by two light rays 104. The central area 94, the peripheral area 95, and the peripheral area 96 are positioned inside the range sandwiched between the two light rays 104. The central area 94, the peripheral area 95, and the peripheral area 96 form an area group.

In the fourth example, an area 98 is the first area, as illustrated in Fig. 6B. The area 98 is positioned at a distance from the optical axis 101 on the bottom surface.

When the scattering of light in the sample is very small, light rays radiating from the area 98 are represented by two light rays 100. The central area 94 and the peripheral area 95 are positioned inside the range sandwiched between the two light rays 100. The central area 94 and the peripheral area 95 form an area group. When the fourth example is compared with the second example, the fourth example has a fewer number of areas in the area group.

When the scattering of light in the sample is very large, light rays radiating from the area 98 are represented by two light rays 104. The central area 94, the peripheral area 95, and the peripheral area 96 are positioned inside the range sandwiched between the two light rays 104. The central area 94, the peripheral area 95, and the peripheral area 96 form an area group.

In the first example, the number of areas in the area group is zero. Thus, the refractive index distribution of each area included in the area group is not used in the computation process. The point spread function is calculated using the refractive index of the space between the refractive index image 90 and the observation optical system 51'. It is assumed that the calculation in the case where the number of areas in the area group is zero is also included in the calculation in the calculation process.

In the second, third, and fourth examples, areas positioned outside the peripheral area 96 are not included in the area group. Thus, these areas are not used in the calculation of the point spread function. However, these areas may be used in the calculation of the point spread function. In other words, all areas positioned on the predetermined direction 102 side from the first area may be considered as an area group to calculate the point spread function.

The first area is the area for which the point spread function is to be calculated. Thus, it is possible to calculate the respective point spread functions for the divided areas by changing the area targeted as the first area.

In the calculation process, the point spread function of the first area is calculated using the refractive index distribution of each area included in the area group. The first area in the first image 80 is the area 84 in the second example. In the refractive index image 90, the area 93 corresponds to the area 84. Further, in the refractive index image 90, the area group is constituted of the central area 94 and the peripheral areas 95, or constituted of the central area 94, the peripheral area 95, and the peripheral area 96.

Thus, the point spread function of the area 93 is calculated using the refractive index distribution of each area that constitutes the central area 94 and the refractive index distribution of each area that constitutes the peripheral area 95, or the point spread function of the area 93 is calculated using the refractive index distribution of each area that constitutes the central area 94, the refractive index distribution of each area that constitutes the peripheral area 95, and the refractive index distribution of each area that constitutes the peripheral area 96. The point spread function of the area 93 can be treated as the point spread function of the area 84 in the first image 80.

The area 84 is the first area in the first image 80. Each area of the first image 80 already has information on brightness of the optical image of the sample. Thus, an image having a point spread function (hereinafter referred to as "PSF image") is generated separately from the first image 80.

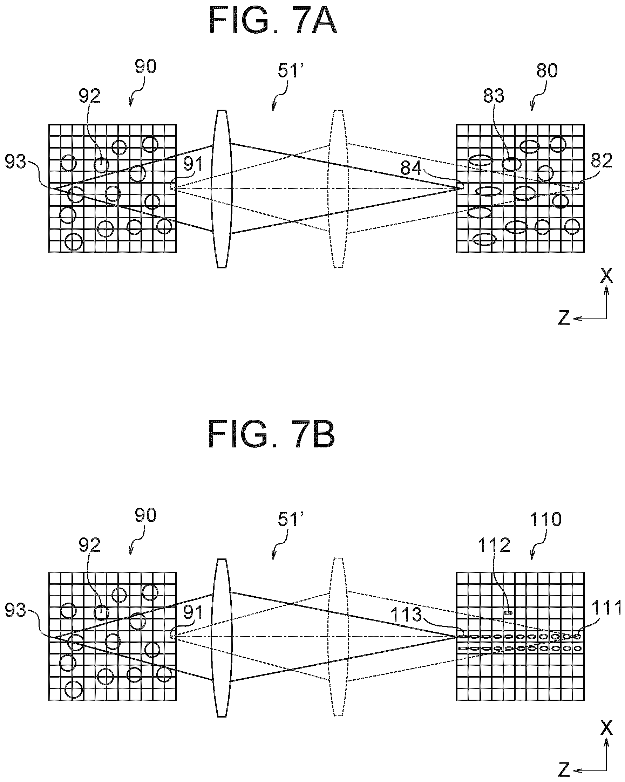

Figs. 7A and 7B are diagrams illustrating the first image, the refractive index image, and a PSF image. Fig. 7A is a diagram illustrating the first image and the refractive index image. Fig. 7B is a diagram illustrating the refractive index image and a PSF image. Fig. 7A is the same diagram as Fig. 5A, and a description thereof is omitted.

The first image 80 is divided into a plurality of areas. Thus, as illustrated in Fig. 7B, a PSF image 110 is also divided into a plurality of areas. The PSF image 110 is divided into 11 areas in both of the X-axis direction and the Z-axis direction.

As can be understood from the comparison between Fig. 7A and Fig. 7B, the area corresponding to an area 111 in the PSF image 110 is the area 82. The area corresponding to an area 112 is the area 83. The area corresponding to an area 113 is the area 84. Thus, each area of the PSF image 110 has the point spread function of the area corresponding to the first area of the first image 80. In Fig. 7B, the point spread function is illustrated only for a partial area.

Returning to Fig. 3, the description continues. Upon completion of step S40, step S50 is performed.

At step S50, a first generation process is performed. In the first generation process, respective second images corresponding to the areas are generated using the respective point spread functions calculated for the areas.

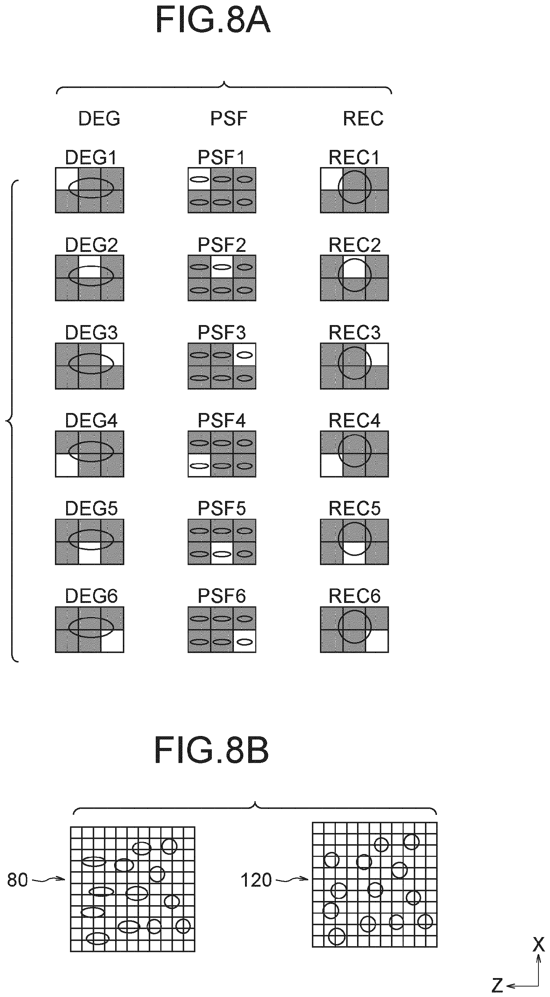

Figs. 8A and 8B are diagrams illustrating the first image, a second image, and a third image. Fig. 8A is a diagram illustrating the first image and a second image. Fig. 8B is a diagram illustrating the first image and a third image.

Fig. 8A illustrates a partial area of the first image, a partial area of the PSF image, and a second image group.

An area DEG is a partial area of the first image 80. The area DEG is formed of an area DEG1, an area DEG2, an area DEG3, an area DEG4, an area DEG5, and an area DEG6.

An area PSF is a partial area of the PSF image 110 and corresponds to the area DEG. The area PSF is formed of an area PSF1, an area PSF2, an area PSF3, an area PSF4, an area PSF5, and an area PSF6.

A second image group REC is an image of an area corresponding to the area DEG and the area PSF. The second image group REC is formed of a second image REC1, a second image REC2, a second image REC3, a second image REC4, a second image REC5, and a second image REC6.

The image of the area DEG1 is the first image. The image of the area PSF1 is a point spread function. The second image REC1 is generated from the image of the area DEG1 and the image of the area PSF1.

In the area DEG, the shape of the cell nucleus is an oval. In the second image, the shape of the cell nucleus is a circle. Thus, in the first generation process, a restored image is generated from a degraded image. Upon completion of step S50, step S60 is performed.

In generation of the second image, it is preferable to perform mask processing on the image of each area in area DEG. The mask processing includes, for example, blurring the periphery of the image.

At step S60, a third image is generated. The third image is an image corresponding to the first image. In generation of the third image, the respective second images corresponding the areas are combined.

Fig. 8B illustrates the first image 80 and a third image 120. The third image 120 is generated by combining the second images. The second images are generated based on the first image 80, and the third image is generated based on the second images. Thus, the third image 120 is the image corresponding to the first image 80.

In the first image 80, the shape of the cell nucleus is an oval. In the third image 120, the shape of the cell nucleus is a circle. Thus, in the sample image generation device 1, it is possible to generate a high-quality restored image from a degraded image.

In combining the second images, weighting can be performed. In two adjacent second images, the influence from one of the second images may be halved at the boundary between the two images.

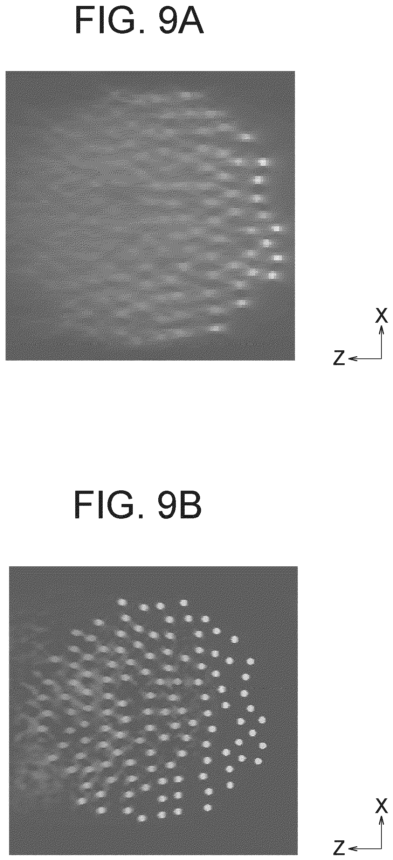

Figs. 9A and 9B are diagrams illustrating a first image and a third image. Fig. 9A is a diagram illustrating a first image. Fig. 9B is a diagram illustrating a third image.

The right end of the image represents the image of the top surface of the sample, and the left end of the image represents the image of the bottom surface of the sample. The image quality is higher in the third image than in the first image over the entire range from the top surface to the bottom surface of the sample.

As described above, not only the refractive index distribution of the central area but also the refractive index distribution of the peripheral area is used in the calculation of the point spread function. Thus, it is possible to calculate the point spread function with higher accuracy compared to restoration techniques that use only the refractive index distribution of the central area. As a result, it is possible to restore an image with high accuracy in the sample image generation device of the present embodiment.

In the sample image generation device of the present embodiment, it is preferable that in the calculation process, the processor sets a point light source in the first area and calculates a point spread function of the first area using a first wavefront from a wave source of which is the set point light source.

As explained in Fig. 5C, the area group is determined by the range of light originating from the first area and radiating in the predetermined direction. The light emitted from the first area passes through the area group and is incident on the observation optical system. The point spread function is then obtained from the light emitted from the observation optical system.

The light radiating from the first area is obtained by setting a point light source in the first area. A wavefront is emitted from the point light source, that is, the wave source of the wavefront is the point light source. Assuming that this wavefront is a first wavefront, it is possible to calculate the point spread function of the first area using the first wavefront.

In the sample image generation device of the present embodiment, it is preferable that in the calculation process, the processor calculates a second wavefront, using the first wavefront and the refractive index distribution corresponding to each of the areas included in the area group, calculates an intensity distribution corresponding to a third wavefront, using the calculated second wavefront, and calculates a point spread function of the first area, using the calculated intensity distribution. The second wavefront is a wavefront propagating through the sample in the predetermined direction, and the third wavefront is a wavefront at a position of a focal plane of the virtual observation optical system.

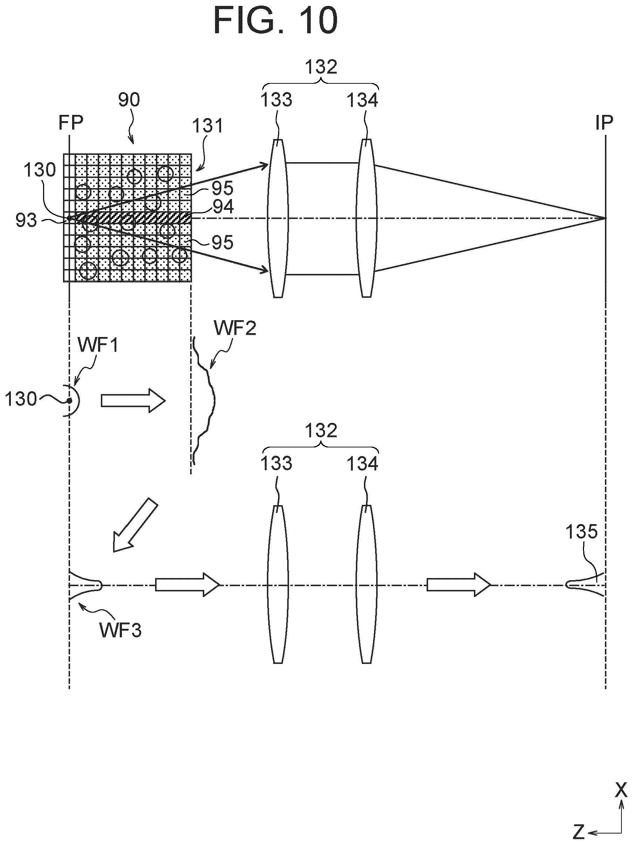

Fig. 10 is a diagram illustrating propagation of a wavefront. The same component as that in Fig. 5C is denoted by the same numeral and a description thereof is omitted.

A refractive index distribution is used in calculation of a point spread function. Thus, a description will be given using the refractive index image 90. In the refractive index image 90, the area 93 corresponds to the first area. Thus, the area 93 is positioned at a focal plane FP. Furthermore, a point light source 130 is set in the area 93.

A first wavefront WF1 is emitted from the point light source 130. The first wavefront WF1 propagates from the area 93 to a top surface 131 of the refractive index image 90. The top surface 131 is the outer edge of the sample. An observation optical system 132 is positioned on the top surface 131 side. Thus, the first wavefront WF1 propagates in the predetermined direction.

It is possible to calculate propagation of a wavefront by simulation. The observation optical system 132 is a virtual optical system and formed of, for example, an objective lens 133 and an imaging lens 134. The optical specifications of the observation optical system 132 are the same as those of the observation optical system 51. It is possible to acquire the optical specifications, for example, magnification and numerical aperture, based on the various information.

The first wavefront WF1 propagates through the area group and reaches the top surface 131. A second wavefront WF2 is emitted from the top surface 131. The second wavefront WF2 is a wavefront after propagating through the area group. The area group is formed of the central area 94 and the peripheral area 95. Thus, it is possible to calculate the second wavefront WF2 using the refractive index distribution of each area included in the area group.

In the observation optical system 132, the focal plane FP and an image plane IP are conjugate. In order to obtain a point spread function 135 in the image plane IP, the wavefront in the focal plane FP is necessary. The second wavefront WF2 is positioned at the top surface 131. By propagating the second wavefront WF2 to the focal plane FP, it is possible to obtain a third wavefront WF3 as a wavefront in the focal plane FP.

The imaging optical system 132 forms a Fourier optical system. It is possible to calculate the point spread function 135 corresponding to the imaging plane of the third wavefront WF3, using a pupil function of the imaging optical system 132. The calculation formula is presented below. In the calculation formula, WF3 is the third wavefront, P is the pupil function of the imaging optical system 132, $U_{135}$ is a wavefront in the image plane, and $I_{135}$ is the intensity distribution in the image plane.

[Mathematical Formula 1]

$$U_{135} = F^{-1}\left[F\{WF_3\}^{*}P\right], \quad I_{135} = \left|U_{135}\right|^{2}$$

The size of the area group differs between Fig. 10 and Fig. 5C. The range of the peripheral area 95 in Fig. 10 is larger than the range of the peripheral area 95 and the peripheral area 96 added together in Fig. 5C. In Fig. 10, the point spread function is calculated by considering all areas positioned on the predetermined direction side from the first area as an area group.

In order to accurately calculate the point spread function 135, it is preferable to use all refractive index distributions of all areas that constitute the area group. In Fig. 10, since the area 93 is the first area, the refractive index distributions of all areas positioned from the area 93 to the top surface 131 are used. When the refractive index distributions of all areas positioned from the first area to the top surface of the sample are used, it is possible to calculate the point spread function more accurately.

In the sample image generation device of the present embodiment, it is preferable that in the calculation process, the processor determines whether a wavefront propagating through the sample has reached an outer edge of the sample, in the predetermined direction. The second wavefront is a wavefront at a position where the wavefront is determined to have reached the outer edge.

The first wavefront WF1 propagates from the area 93 to the top surface 131. Thus, it is necessary to determine whether the first wavefront WF1 has reached the top surface 131 in the predetermined direction. The second wavefront WF2 is positioned at the top surface 131. Thus, the second wavefront WF2 is a wavefront at a position where the wavefront is determined to have reached the top surface 131.

In the sample image generation device of the present embodiment, it is preferable that the second wavefront is a wavefront after passing through the sample and before reaching the virtual observation optical system.

In calculation of the point spread function 135, the third wavefront WF3 passes through the observation optical system 132. If the second wavefront WF2 is a wavefront after passing through the observation optical system 122, it is impossible to accurately calculate the point spread function 135. Thus, the second wavefront WF2 has to be a wavefront emitted from the top surface 131 and before reaching the observation optical system 132.

In the sample image generation device of the present embodiment, it is preferable that in the second acquisition process, the processor acquires the refractive index distribution for each of small areas obtained by further dividing the divided area. Furthermore, it is preferable that in the calculation process, the processor calculates point spread functions of the small areas, using the refractive index distribution of the small areas, and calculates a point spread function of the area, using the point spread functions of the small areas.

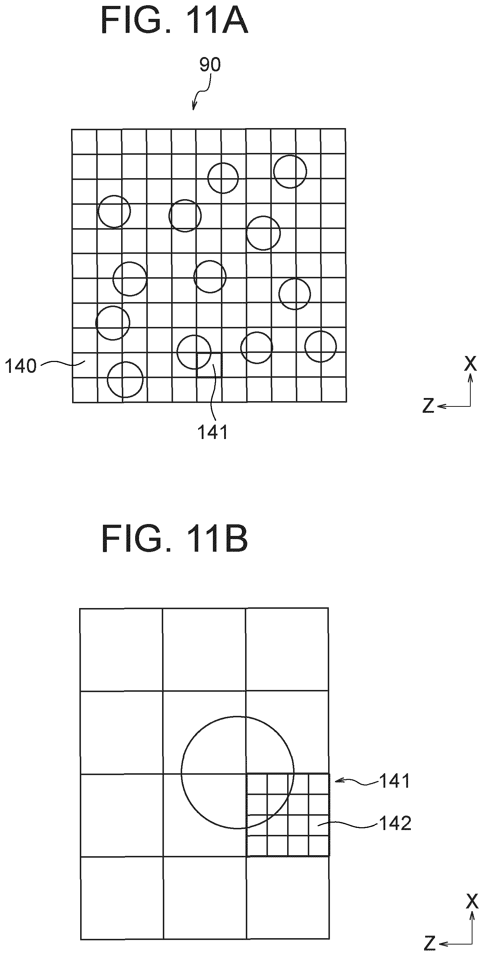

Figs. 11A and 11B are diagrams illustrating the refractive index image. Fig. 11A is a diagram illustrating the entire refractive index image. Fig. 11B is a diagram illustrating a part of the refractive index image.

To accurately calculate the point spread function, a detailed refractive index distribution can be used. The greater the number of areas or the smaller the area of an area, the more detailed refractive index distribution is obtained. When an area 140 is the first area in the refractive index image 90, an area 141 is included in the area group.

In Fig. 11A, the area 141 is formed of a single region. Then, the area 141 is divided into a plurality of regions. For example, as illustrated in Fig. 11B, the area 141 is divided into 16 small areas 142. In this case, since the refractive index distribution is obtained for each of the small areas 142, it is possible to obtain a detailed refractive index distribution. As a result, it is possible to accurately calculate the point spread function.

In calculation of wavefront propagation, it is possible to use the refractive index distribution of each small area 142. Furthermore, it is possible to obtain an average refractive index distribution from the refractive index distribution of each small area 142. Then, in calculation of wavefront propagation, it is possible to use the average refractive index distribution as the refractive index distribution of the area 141.

Since the refractive index distribution is obtained for each small area, it is possible to calculate the point spread function for each small area. Thus, it is possible to calculate the point spread function of the area 141 using the point spread functions of the small areas 142.

In the sample image generation device of the present embodiment, it is preferable that the processor performs a provisional calculation process of provisionally calculating respective point spread functions for the areas divided in the division process, and performs the division process such that the area in which an intensity peak value of the provisionally calculated point spread function is less than 1/5 of a reference is set to be smaller than the area in which an intensity peak value of the provisionally calculated point spread function is equal to or greater than 1/5 of the reference. The reference is an intensity peak value of a point spread function when the sample is not present.

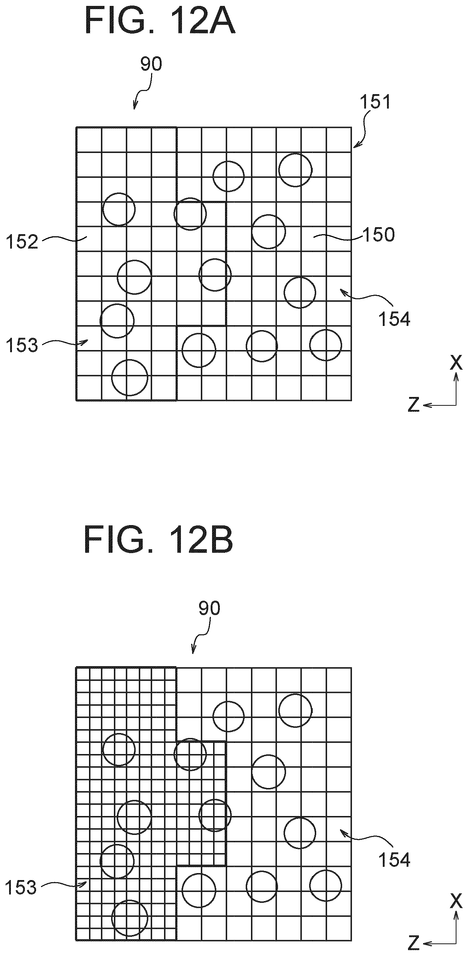

Figs. 12A and 12B are diagrams illustrating the refractive index image. Fig. 12A is a diagram illustrating a state of the first division. Fig. 12B is a diagram illustrating a state of the second division.

The point spread function is calculated using the refractive index distribution. The shape of the point spread function therefore varies with a distribution state of refractive index. As illustrated in Fig. 12A, when an area 150 is the first area, a row of areas is positioned on a top surface 151 side of the area 150. Thus, the refractive index distribution of a row of areas is considered in calculation of the point spread function.

In contrast, when an area 152 is the first area, 10 rows of areas are positioned on the top surface 151 side of the area 152. Thus, the refractive index distribution of 10 rows of areas is considered in calculation of the point spread function.

The greater the number of areas included in the area group, the greater the spread of the refractive index distribution. In this case, for example, there are more refractive index distributions to be calculated. The detailedness of the refractive index distribution is affected by the number of areas or the area of an area. When the number of areas is small or the area of an area is large, the larger the spread of the refractive index distribution, the larger the difference between the shape of the point spread function and the ideal shape. In the area selected as the first area, there may be a large difference between the shape of the point spread function and the ideal shape. In this case, in the selected area, it is preferable to calculate the point spread function based on the detailed refractive index distribution.

The provisional calculation process is therefore performed. In the provisional calculation process, the respective point spread functions are provisionally calculated for the areas divided in the division process. Subsequently, based on the intensity peak values of the provisionally calculated point spread functions, the areas are divided into a target area 153 and a non-target area 154, as illustrated in Fig. 12A.

The target area 153 is an area in which the intensity peak value is less than 1/5 of the reference. The non-target area 154 is an area in which the intensity peak value is equal to or greater than 1/5 of the reference. The reference is an intensity peak value of a point spread function when the sample is not present.

Finally, as illustrated in Fig. 12B, each area in the target area 153 is divided into a plurality of areas. As a result, it is possible to set the size of each area in the target area 153 to be smaller than the size of each area in the non-target area 154. In Fig. 12B, each area in the target area 153 is divided into four areas.

In the sample image generation device of the present embodiment, it is preferable that the processor performs an estimation process of estimating the sample, and in the division process, in a direction orthogonal to the predetermined direction, the size of an area that is an area of the estimated sample and to which an outer edge of the estimated sample belongs is set to be smaller than the size of an area that is not an area of the estimated sample and to which the outer edge of the estimated sample does not belong.

In the sample image generation device of the present embodiment, it is possible to generate an XY image, an XZ image, and a YZ image from the XY image group. Thus, it is possible to use the XY image, the XZ image, and the YZ image as the first image. The XY image is an image in a plane orthogonal to the predetermined direction.

In the XY image, there also may be a large difference between the shape of the point spread function and the ideal shape in the area selected as the first area. In this case, in the selected area, it is preferable to calculate the point spread function based on the detailed refractive index distribution.

A detailed refractive index distribution is obtained by increasing the number of areas or reducing the area of an area. It is possible to increase the number of areas by dividing one area. To increase the number of areas, for example, only the areas that represent the sample can be targeted as areas to be divided. In this case, it is possible to use the outer edge to extract target areas to be divided.

The division of areas is performed in the first image. The refractive index image corresponds to the first image, so the description will be given using the refractive index image.

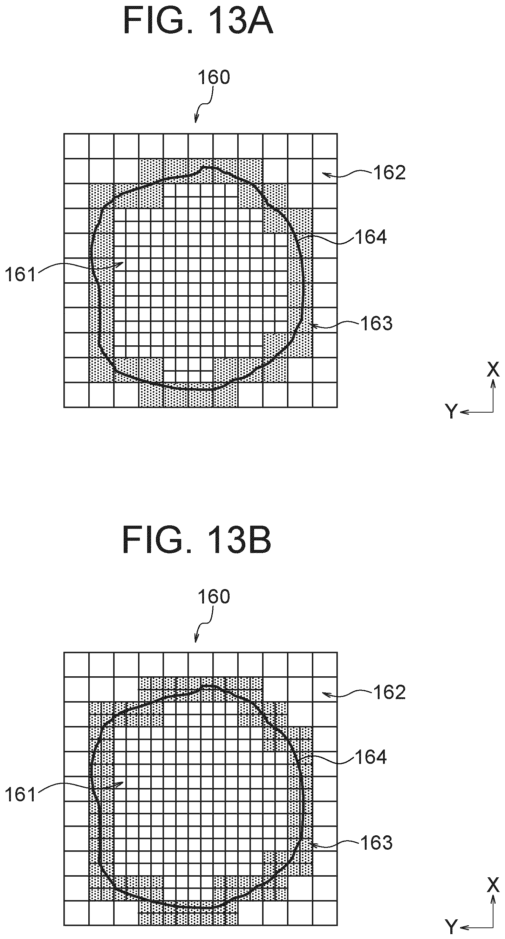

Figs. 13A and 13B are diagrams illustrating a refractive index image. Fig. 13A is a diagram illustrating a first example of division of areas. Fig. 13B is a diagram illustrating a second example of division of areas.

As illustrated in Figs. 13A and 13B, a refractive index image 160 has an interior area 161, an exterior area 162, and an outer edge area 163.

The interior area 161 is an area positioned inside an outer edge 164. The outer edge 164 does not belong to the interior area 161. The interior area 161 represents a sample. The exterior area 162 is an area positioned outside the outer edge 164. The outer edge 164 does not belong to the exterior area 162. The exterior area 162 does not represent a sample. The outer edge area 163 is an area to which the outer edge 164 of the sample belongs.

In the first example of division of areas, each area in the interior area 161 is divided into a plurality of areas, as illustrated in Fig. 13A. Each area in the exterior area 162 and each area in the outer edge area 163 are not divided into a plurality of areas.

In the second example of division of areas, each area in the interior area 161 and each area in the outer edge area 163 are divided into a plurality of areas, as illustrated in Fig. 13B. Each area in the exterior area 162 is not divided into a plurality of areas.

In both the first and second examples, each area in the interior area 161 is divided, whereas each area in the exterior area 162 is not divided. The size of each area in the interior area 161 is set to be smaller than the size of the exterior area 162.

The interior area 161 is an area that represents a sample and to which the outer edge 164 does not belong. The exterior area 162 is an area that does not represent a sample and to which the outer edge 164 does not belong. In both the first and second examples, the size of an area that represents a sample and to which the outer edge does not belong is set to be smaller than the size of an area that does not represent a sample and to which the outer edge does not belong.

For the outer edge area 163, the division of areas differs between the first example and the second example. In the first example, each area in the outer edge area 163 is not divided into a plurality of areas. In contrast, in the second example, each area in the outer edge area 163 is divided into a plurality of areas.

In the first example, the size of each area in the outer edge area 163 is larger than the size of each area in the interior area 161 and equal to the size of the exterior area 162. In the second example, the size of each area in the outer edge area 163 is equal to the size of each area in the interior area 161 and smaller than the size of the exterior area 162.

In both the first and second examples, it is possible to increase the number of areas that represent the sample. In this case, it is possible to calculate the point spread function based on the detailed refractive index distribution. As a result, it is possible to restore an image with high accuracy even in an image in a plane orthogonal to the predetermined direction.

In the sample image generation device of the present embodiment, the calculation process differs slightly depending on the kind of microscope used to acquire the XY images. A case where the microscopes used to acquire the XY images are a fluorescence microscope and a luminescence microscope will be described.

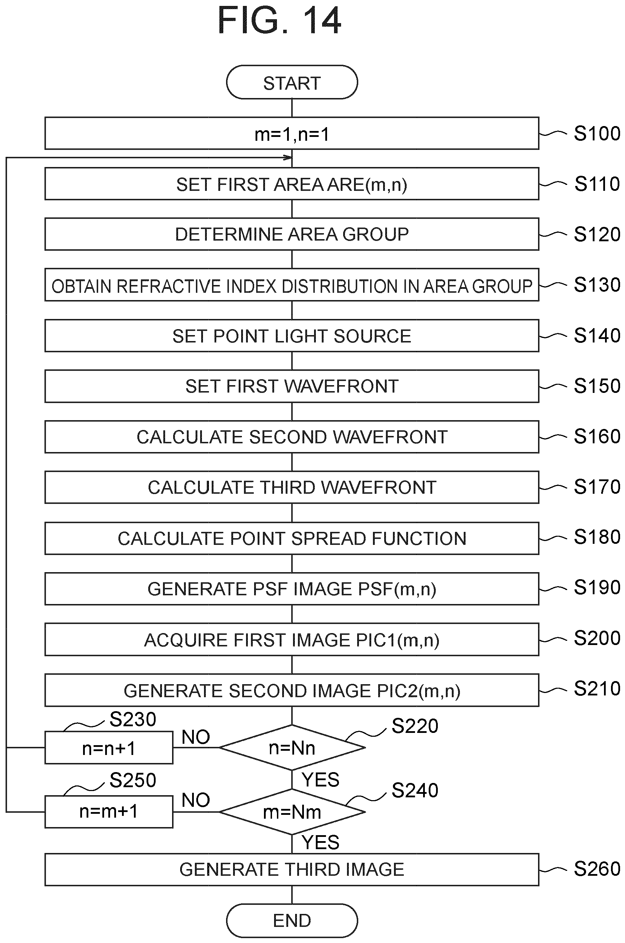

Fig. 14 is a flowchart of the calculation process. The first acquisition process at step S10, the division process at step S20, and the second acquisition process at step S30 are completed. Thus, the first image and the refractive index image have been divided into a plurality of areas. The number of divisions is Nm and Nn.

At step S100, a variable m and a variable n are set to 1.

At step S110, a first area ARE(m,n) is set. The first area ARE(m,n) is an area for which a point spread function is to be calculated. The areas in the first image correspond one-to-one to the areas in the refractive index image. Thus, when the first area ARE(m,n) is set in the first image, the first area ARE(m,n) is also set in the refractive index image.

At step S120, an area group is determined. The area group is used in calculation of the point spread function. It is possible to determine each area of the area group by the first area ARE(m,n) and the object-side numerical aperture of the observation optical system. The determination of an area group is performed in the refractive index image.

Each area of the area group may be determined using scattered light, instead of the object-side numerical aperture. Alternatively, all the areas positioned on the top surface side of the sample from the first area ARE(m,n) may be considered as each area of the area group.

At step S130, the refractive index distribution in the area group is obtained. The point spread function is calculated using the refractive index distribution of each area included in the area group. The refractive index image has a refractive index distribution. Since the determination of the area group is performed in the refractive index image, the refractive index distribution in the area group is obtained by determining the area group.

At step S140, a point light source is set. The point light source is set in the first area ARE(m,n).

At step S150, a first wavefront is set. At step S160, a second wavefront is calculated. At step S170, a third wavefront is calculated. At step S180, a point spread function is calculated. The first wavefront, the second wavefront, the third wavefront, and the point spread function have already been described and are not further elaborated here.

The microscopes used to acquire the XY images are a fluorescence microscope and a luminescence microscope. In the fluorescence microscope, excitation light uniformly illuminates the focal plane and a wide range in front and rear of the focal plane. Furthermore, in the luminescence microscope, the sample is not irradiated with excitation light. In both cases, it is not necessary to consider the excitation light intensity. Thus, it is possible to calculate the point spread function using only the intensity distribution set with the point light source.

At step S190, a PSF image PSF(m,n) is generated. The point spread function calculated at step S180 is the point spread function in the first area ARE(m,n). The first area ARE(m,n) changes with the value of the variable m and the value of the variable n. Thus, each time the point spread function is calculated, the point spread function is stored in the PSF image PSF(m,n).

At step S200, a first image PIC1(m,n) is acquired. At step S210, a second image PIC2(m,n) is generated. The first image and the second image have already been described and are not further elaborated here. The acquisition of the first image PIC1(m,n) can be performed between step S110 and step S220.

At step S220, the value of the variable n is compared with the number of divisions Nn. If the value of the variable n does not match the number of divisions Nn, step S230 is performed. At step S230, 1 is added to the value of the variable n.

Upon completion of step S230, the process returns to step S110. At step S230, 1 is added to the value of the variable n. Thus, the point spread function is calculated for a new first area ARE(m,n).

At step S220, if the value of the variable n matches the number of divisions Nn, step S240 is performed. At step S240, the value of the variable m is compared with the number of divisions Nm. If the value of the variable m does not match the number of divisions Nm, step S250 is performed. At step S250, 1 is added to the value of the variable m.

Upon completion of step S250, the process returns to step S110. At step S250, 1 is added to the value of the variable m. Thus, the point spread function is calculated for a new first area ARE(m,n).

At step S240, if the value of the variable m matches the number of divisions Nm, step S260 is performed. At step S260, a third image is generated. The third image has already been described and is not further elaborated here.

In the sample image generation device of the present embodiment, it is preferable that in the calculation process, the processor calculates an excitation light intensity at a position of the set point light source, calculates a fluorescence intensity distribution, using the calculated intensity distribution and the calculated excitation light intensity, and calculates a point spread function of the first area, using the calculated fluorescence intensity distribution.

A case of the microscopes used to acquire the XY images being an LSM, a two-photon microscope, and a sheet illumination microscope will be described.

In the LSM and the two-photon microscope, excitation light illuminates a single point on the focal plane. For example, in the refractive index image 90 illustrated in Fig. 10, excitation light is incident from the top surface 131 toward the point light source 130. In this case, the excitation light is affected by the refractive index distribution in the same manner as the light radiating from the point light source 130.

Thus, the excitation light intensity has to be considered in the LSM and the two-photon microscope. It is possible to obtain the excitation light intensity as follows.

At step 1, the amplitude distribution of a wavefront the wave source of which is the focus position of excitation light is calculated. At this time, the refractive index distribution in the refractive index image 90 is not used. The focus position of excitation light is the position in the area in which the point light source is set, that is, the position in the first area.

At step 2, the amplitude distribution of the excitation light at the focus position is calculated using the amplitude distribution of the wavefront calculated at step 1. At this time, the refractive index distribution in the refractive index image 90 is used.

At step 3, an excitation light intensity Iex(Pi) at the point light source position is calculated using the amplitude distribution of the excitation light at the focus position calculated at step 2.

A predetermined intensity distribution IFL(Pi) is the intensity distribution in the case where the microscope used to acquire the XY images is a fluorescence microscope or a luminescence microscope. The predetermined intensity distribution IFL(Pi) is the intensity distribution in the image plane calculated based on the intensity distribution set with the point light source.

When the microscope used to acquire the XY images is a fluorescence microscope, the predetermined intensity distribution IFL(Pi) is a fluorescence intensity distribution. When the microscope is an LSM, a two-photon microscope, or a sheet illumination microscope, a fluorescence image is formed in the same manner as in a fluorescence microscope. Thus, when the microscope is an LSM, a two-photon microscope, and a sheet illumination microscope, the predetermined intensity distribution IFL(Pi) is also a fluorescence intensity distribution.

An intensity distribution F1(Pi) is the intensity distribution in the image plane in the case where an LSM is used. When an LSM is used, the intensity distribution F1(Pi) is affected by the excitation light intensity. The intensity distribution F1(Pi) is represented by the following Expression (4).

$$F1(Pi) = Iex(Pi) \times IFL(Pi) \qquad (4)$$

An intensity distribution F2(Pi) is the intensity distribution in the image plane in the case where a two-photon microscope is used. When a two-photon microscope is used, the intensity distribution F2(Pi) is affected by the excitation light intensity. The intensity distribution F2(Pi) is represented by the following Expression (5).

$$F2(Pi) = Iex(Pi)^2 \times IFL(Pi) \qquad (5)$$

When an LSM is used to acquire the XY images, the point spread function can be calculated from the intensity distribution F1(Pi). Furthermore, when a two-photon microscope is used to acquire the XY images, the point spread function can be calculated from the intensity distribution F2(Pi).

Since the predetermined intensity distribution IFL(Pi) is a fluorescence intensity distribution, the intensity distribution F1(Pi) and the intensity distribution F2(Pi) are also fluorescence intensity distributions.

In a sheet illumination microscope, excitation light illuminates the focal plane. For example, in the refractive index image 90 illustrated in Fig. 10, excitation light is incident on one block layer positioned at the focal plane FP. In this case, the excitation light is affected by the refractive index distribution in one block layer.

Thus, in a sheet illumination microscope, the excitation light intensity has to be considered. It is possible to obtain the excitation light intensity as follows.

At step 1, the excitation light intensity in one block layer is calculated. At this time, the refractive index distribution in the refractive index image 90 is used.

At step 2, an excitation light intensity I'ex(Pi) in the area in which the point light source is set in one block layer, that is, the first area is calculated. As described above, the predetermined intensity distribution IFL(Pi) is a fluorescence intensity distribution.

An intensity distribution F3(Pi) is the intensity distribution in the image plane in the case where a sheet illumination microscope is used. When a sheet illumination microscope is used, the intensity distribution F3(Pi) is affected by the excitation light intensity. The intensity distribution F3(Pi) is represented by the following Expression (6).

$$F3(Pi) = I'ex(Pi) \times IFL(Pi) \qquad (6)$$

When a sheet illumination microscope is used to acquire the XY images, the point spread function can be calculated from the intensity distribution F3(Pi). Since the predetermined intensity distribution IFL(Pi) is a fluorescence intensity distribution, the intensity distribution F3(Pi) is also a fluorescence intensity distribution.

In the sample image generation device of the present embodiment, it is preferable that in the calculation process, the processor calculates the excitation light intensity, using a refractive index distribution of an excitation light wavelength.

The refractive index distribution is used in calculation of the predetermined intensity distribution IFL(Pi), calculation of the excitation light intensity Iex(Pi), and calculation of the excitation light intensity I'ex(Pi). The calculation of the predetermined intensity distribution IFL(Pi) is the intensity distribution of fluorescence. The wavelength of fluorescence is different from the wavelength of excitation light. Thus, the refractive index distribution in the wavelength of fluorescence is used in the calculation of the predetermined intensity distribution IFL(Pi). The refractive index distribution in the wavelength of excitation light is used in the calculation of the excitation light intensity Iex(Pi).

In the sample image generation device of the present embodiment, it is preferable that the first image is an image obtained by capturing an image with a device with a confocal pinhole, and in the calculation process, the processor calculates an intensity of light passing through the confocal pinhole using the calculated intensity distribution, calculates a fluorescence intensity, using the calculated excitation light intensity and the calculated intensity of light, and calculates a point spread function of the first area, using the calculated fluorescence intensity.

In a non-confocal LSM, no pinhole is disposed in the image plane. The intensity distribution F1(Pi) is therefore represented by Expression (4). In contrast, in a confocal LSM, a pinhole is disposed in the image plane. The predetermined intensity distribution IFL(Pi) is therefore affected by the aperture of the pinhole.

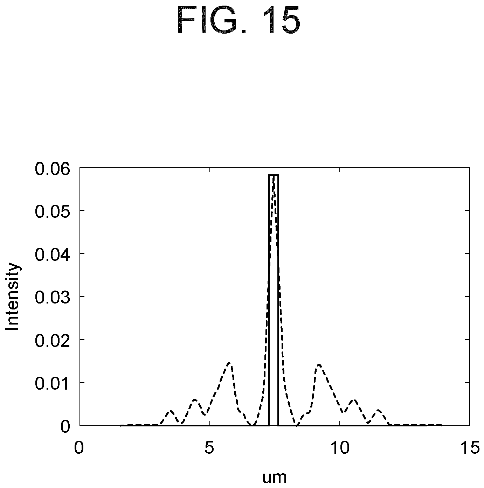

Fig. 15 is a diagram illustrating a predetermined intensity distribution and transmission characteristics of a pinhole. The dashed line indicates a predetermined intensity distribution, and the solid line indicates the transmission characteristics of a pinhole. In the pinhole, light passes only through the aperture. Thus, an intensity distribution I'FL(Pi) of light emitted from the confocal pinhole is determined by the intensity distribution positioned within a rectangular range indicated by the solid line in the predetermined intensity distribution IFL(Pi).

An intensity distribution F4(Pi) is the intensity distribution in the image plane in the case where a confocal LSM is used. When a confocal LSM is used, the intensity distribution F4(Pi) is affected by the excitation light intensity. The intensity distribution F4(Pi) is represented by the following Expression (7).

$$F4(Pi) = Iex(Pi) \times I'FL(Pi) \qquad (7)$$

When a confocal LSM is used to acquire the XY images, the point spread function can be calculated from the intensity distribution F4(Pi). Since the predetermined intensity distribution IFL(Pi) is a fluorescence intensity distribution, the intensity distribution F4(Pi) is also a fluorescence intensity distribution.

In the sample image generation device of the present embodiment, it is preferable that in the calculation process, the processor calculates the second wavefront using a beam propagation method.

As illustrated in Fig. 10, the position of the first wavefront WF1, the position of the second wavefront WF2, and the position of the third wavefront WF3 are different from each other. A wavefront propagates from the position of the first wavefront WF1 to the position of the second wavefront WF2 and from the position of the second wavefront WF2 to the position of the third wavefront WF3. A beam propagation method can be used in calculation of the second wavefront WF2 and calculation of the third wavefront WF3.

In the beam propagation method, an object model is replaced by a plurality of thin layers. Then, an image of the object model is calculated by successively calculating wavefront change when light passes through the layers. The beam propagation method is disclosed, for example, in "High-resolution 3D refractive index microscopy of multiple-scattering samples from intensity images", Optica, Vol. 6, No. 9, pp. 1211-1219 (2019).

A sample image generation system of the present embodiment includes an observation optical system configured to form an optical image of a sample, an imager configured to capture an optical image, and the sample image generation device of the present embodiment.

In the sample image generation system of the present embodiment, it is possible to restore an image with high accuracy.

The sample image generation system of the present embodiment includes a memory and a processor. The processor performs a first acquisition process of acquiring a first image from the memory, performs a division process of dividing the acquired first image into a plurality of areas, performs a second acquisition process of acquiring a refractive index distribution of a sample from the memory, performs a calculation process of calculating respective point spread functions for the divided areas, using the acquired refractive index distribution, performs a first generation process of generating respective second images corresponding to the areas, using the respective point spread functions calculated for the areas, and combines the respective second images corresponding to the areas and generates a third image corresponding to the first image. In the calculation process, the point spread function of a first area is calculated using a refractive index distribution of each of areas included in an area group. The first image is an image obtained by capturing an image of the sample. A predetermined direction in the first image is a direction in which a virtual observation optical system is present among optical axis directions of the virtual observation optical system. The first area is an area for which the point spread function is to be calculated. The area group is constituted of a plurality of areas inside a range in which light rays originating from the first area radiate in the predetermined direction, and includes an area outside a range defined by extending the first area in the predetermined direction. The processor performs a machine learning process to train an AI model. In the machine learning process, the AI model is trained with a plurality of data sets. The data sets include the first image and training data corresponding to the first image. The training data corresponding to the first image is the second images corresponding to the first image.

In the sample image generation device of the present embodiment, the third image is generated from the first image. The first image is a degraded image, and the third image is a restored image. If the third image is considered as training data, it is possible to use the first image and the third image as data for machine learning. Hereinafter, the first image is referred to as the image before enhancement, and the third image is referred to as the enhanced image.

The enhanced image is able to be generated using an AI model trained by supervised machine learning (hereinafter referred to as "supervised ML").

The AI model performs an inference process based on patterns found in data analysis in a training process and thereby provides a function to allow a computer system to execute tasks without explicitly executing a program.

It is possible to subject the AI model to a training process continuously or periodically before executing the inference process.

The AI model by the supervised ML includes an algorithm that trains on existing sample data and training data and makes predictions about new data. The training data is also referred to as teacher data.

Such an algorithm works by constructing an AI model from sample data and training data to make data-driven predictions or decisions represented as outcomes.

In the supervised ML, when a training process is performed, upon input of sample data and training data, the function that best approximates the relationship between input and output is learned. When the trained AI model performs an inference process, the same function is implemented to produce the corresponding output upon new data input.

Examples of commonly used supervised ML algorithms include logistic regression (LR), naive Bayes, random forests (RFs), neural networks (NNs), deep neural networks (DNNs), matrix factorization, and support vector machines (SVMs).

It is possible to perform supervised ML process in the training process of this example. In the training process, the AI model is trained or learned.

When the training process is performed, a sufficient number of data sets are input to an input layer of the AI model and propagated through the AI model to an output layer.

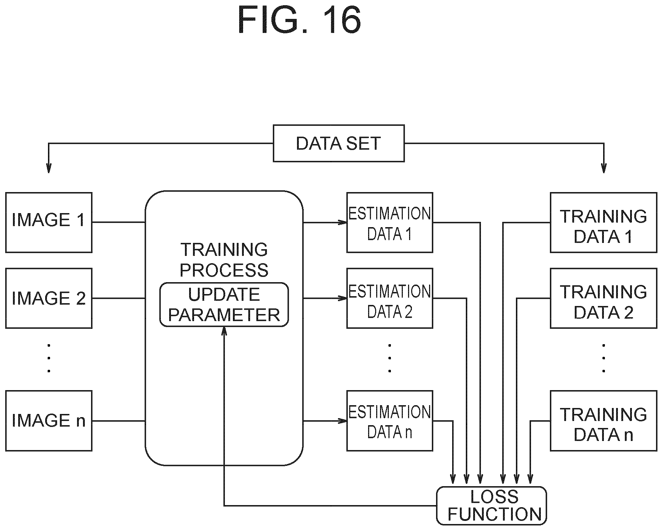

Fig. 16 is a diagram illustrating a training process. The data sets include the image before enhancement and the enhanced image. The image before enhancement is sample data. The enhanced image is training data or teacher data corresponding to the sample data. In Fig. 16, the sample data is represented by an image 1, an image 2, and the like. The enhanced image is training data 1, training data 2, and the like.

In the training process, optimal parameters that generate estimation data from sample data are searched for and updated using, for example, a loss function. Estimation data is generated for the input sample data, the difference between the generated estimation data and the training is evaluated with a loss function, and the parameters that minimize the value of the loss function are searched for.

In the inference process in this example, it is possible to perform an inference process that outputs inference data when new data to be inferred is input to the trained AI model.

When the inference process is performed, the image before enhancement is input to the input layer of the AI model and propagated through the AI model to the output layer.

By performing the inference process, it is possible to generate the enhanced image from the image before enhancement.

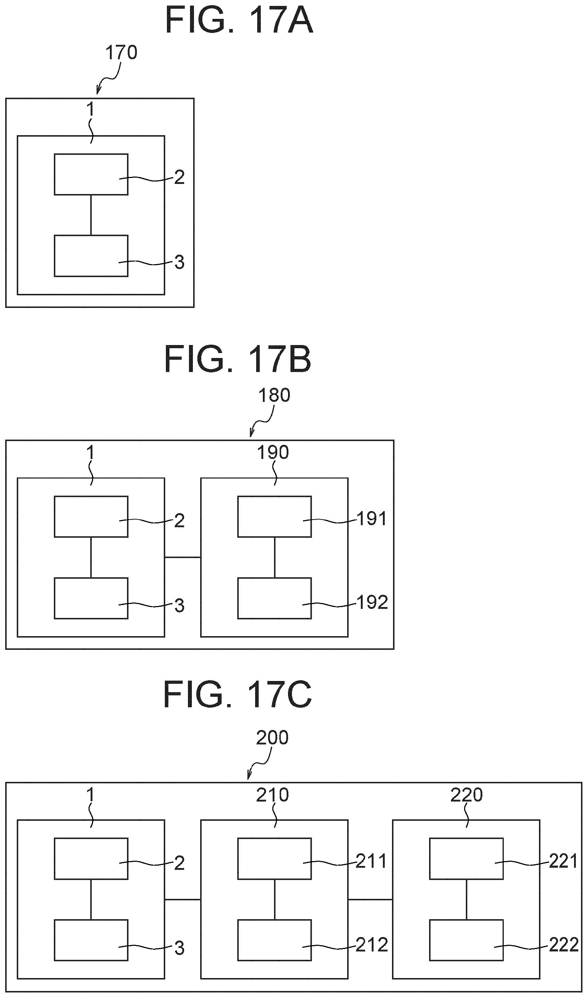

Figs. 17A, 17B, and 17C are diagrams illustrating sample image generation systems of the present embodiment. Fig. 17A is a diagram illustrating a first example of the sample image generation system. Fig. 17B is a diagram illustrating a second example of the sample image generation system. Fig. 17C is a diagram illustrating a third example of the sample image generation system.

As illustrated in Fig. 17A, in the first example of the sample image generation system, a sample image generation system 170 is configured only with the sample image generation device of the present embodiment. In this case, it is possible to perform a training process and an inference process in the processor 3 of the sample image generation device (hereinafter referred to as "first processor").

The sample image generation device 1 can include a first processor and a second processor. The second processor is a processor different from the first processor. It is possible to perform a training process and an inference process in the second processor.

The sample image generation device 1 can include the first processor, the second processor, and a third processor. The third processor is a processor different from the first processor and the second processor. It is possible to perform a training process in the second processor and to perform an inference process in the third processor.

The memory 2 of the sample image generation device 1 stores therein the image before enhancement to be used in the training process, the enhanced image, and the image before enhancement to be used in the inference process.

As illustrated in Fig. 17B, in the second example of the sample image generation system, a sample image generation system 180 is configured with the sample image generation device 1 of the present embodiment and a learning inference device 190. The learning inference device 190 includes a memory 191 and a processor 192.

It is possible to perform a training process and an inference process in the learning inference device 190. In this case, the learning inference device 190 includes a memory and one or more processors. It is possible to perform the inference process in the same processor as that of the training process. The inference process may be performed in a processor different from that of the training process.

The memory 191 of the learning inference device stores the image before enhancement to be used in the training process, the enhanced image, and the image before enhancement to be used in the inference process.

As illustrated in Fig. 17C, in the third example of the sample image generation system, a sample image generation system 200 is configured with the sample image generation device 1 of the present embodiment, a learning device 210, and an inference device 220. The learning device 210 performs a training process, and the inference device 220 performs an inference process.

The learning device 210 includes a memory 211 and a processor 212. The inference device 220 includes a memory 221 and a processor 222. It is possible to perform a training process in the processor 212 of the learning device 210 and to perform an inference process in the processor 222 of the inference device 220.

The memory 211 of the learning device 210 stores therein the image before enhancement to be used in the training process and the enhanced image. The memory 221 of the inference device 220 stores therein the image before enhancement to be used in the inference process.

The learning inference device 190 and the learning device 210 described above receive data to be used in the training process from the sample image generation device 1 via communication or via a recording medium such as a USB memory, and store the received data in the respective memories of the devices.

In the sample image generation system of the present embodiment, it is possible to restore an image with high accuracy.

A sample image generation method of the present embodiment is a sample image generation method using a first image and a refractive index distribution of a sample. The sample image generation method includes: performing a first acquisition process of acquiring the first image from a memory; performing a division process of dividing the acquired first image into a plurality of areas; performing a second acquisition process of acquiring a refractive index distribution of the sample from the memory; performing a calculation process of calculating respective point spread functions for the divided areas using the acquired refractive index distribution; performing a first generation process of generating respective second images corresponding to the areas, using the respective point spread functions calculated for the areas; combining the respective second images corresponding to the areas and generating a third image corresponding to the first image. In the calculation process, the point spread function of a first area is calculated using a refractive index distribution of each of areas included in an area group. The first image is an image obtained by capturing an image of the sample. A predetermined direction in the first image is a direction in which a virtual observation optical system is present among optical axis directions of the virtual observation optical system. The first area is an area for which the point spread function is to be calculated. The area group is constituted of a plurality of areas inside a range in which light rays originating from the first area radiate in the predetermined direction, and includes an area outside a range defined by extending the first area in the predetermined direction.

In the sample image generation method of the present embodiment, it is possible to restore an image with high accuracy.

A recording medium of the present embodiment is a computer-readable recording medium encoded with a program for generating a sample image. The program causes a computer to perform processing including: a first acquisition process of acquiring a first image from a memory; a division process of dividing the acquired first image into a plurality of areas; a second acquisition process of acquiring a refractive index distribution of a sample from the memory; a calculation process of calculating respective point spread functions for the divided areas, using the acquired refractive index distribution; a first generation process of generating respective second images corresponding to the areas, using the respective point spread functions calculated for the areas; and a process of combining the respective second images corresponding to the areas and generating a third image corresponding to the first image. In the calculation process, the point spread function of a first area is calculated using a refractive index distribution of each of areas included in an area group. The first image is an image obtained by capturing an image of the sample. A predetermined direction in the first image is a direction in which a virtual observation optical system is present among optical axis directions of the virtual observation optical system. The first area is an area for which the point spread function is to be calculated. The area group is constituted of a plurality of areas inside a range in which light rays originating from the first area radiate in the predetermined direction, and includes an area outside a range defined by extending the first area in the predetermined direction.

With the recording medium of the present embodiment, it is possible to restore an image with high accuracy.

Industrial Applicability

The present disclosure is suitable for a sample image generation device, a sample image generation method, a sample image generation system, and a recording medium that are capable of restoring an image with high accuracy.

Reference Signs List

| | |
|---|---|
| 1 | sample image generation device |
| 2 | memory |
| 3 | processor |
| 4 | input unit |
| 10 | microscope system |
| 20 | microscope |
| 21 | main body |
| 22 | objective lens |
| 23 | stage |
| 24 | reflection illumination device |
| 25 | imaging unit |
| 26 | controller |
| 27 | sample |
| 30 | processing device |
| 31 | input unit |
| 32 | memory |
| 33 | processor |
| 34 | output unit |
| 40 | estimation device |
| 41 | input unit |
| 42 | memory |
| 43 | processor |
| 44 | output unit |
| 50 | sample |
| 51 | observation optical system |
| 51' | observation optical system |
| 52 | optical axis |
| 53 | XY image group |
| 60 | optical image |
| 70 | sample |
| 71 | cytoplasm |
| 72 | cell nucleus |
| 80 | first image |
| 81 | image of cell nucleus |
| 82, 83, 84 | area |
| 90 | refractive index image |
| 90a | top surface |
| 90b | bottom surface |
| 91, 92, 93, 97, 98 | area |
| 94 | central area |
| 95, 96 | peripheral area |
| 100, 104 | light ray |
| 101 | optical axis |
| 102 | predetermined direction |
| 103 | non-predetermined direction |
| 110 | PSF image |
| 111, 112, 113 | area |
| 120 | third image |
| 130 | point light source |
| 131 | top surface |
| 132 | observation optical system |
| 133 | objective lens |
| 134 | imaging lens |
| 135 | point spread function |

| 140, 141 | area |
|---|---|
| 142 | small area |
| 150, 152 | area |
| 151 | top surface |
| 153 | target area |
| 154 | non-target area |
| 160 | refractive index image |
| 161 | interior area |
| 162 | exterior area |
| 163 | outer edge area |
| 164 | outer edge of sample |
| 170, 180, 200 | sample image generation system |
| 190 | learning inference device |
| 191, 211, 221 | memory |
| 192, 212, 222 | processor |
| 210 | learning device |
| 211 | memory |
| 212 | processor |
| 220 | inference device |
| 221 | memory |
| 222 | processor |
| OBJ | sample |
| AX | optical axis |
| OS | optical system |
| IP | image plane |
| IMG | optical image |
| PIC | image of optical image |
| FP | focal plane |
| DEG, PSF, REC | area |
| WF1 | first wavefront |
| WF2 | second wavefront |
| WF3 | third wavefront |

**Claims**

1. A sample image generation device comprising a memory and a processor, wherein

a first image is an image obtained by capturing an image of a sample,
a predetermined direction in the first image is a direction in which a virtual observation optical system is present among optical axis directions of the virtual observation optical system,
the processor

performs a first acquisition process of acquiring the first image from the memory,
performs a division process of dividing the acquired first image into a plurality of areas,
performs a second acquisition process of acquiring a refractive index distribution of the sample from the memory,
performs a calculation process of calculating respective point spread functions for the divided areas, using the acquired refractive index distribution,
performs a first generation process of generating respective second images corresponding to the areas, using the respective point spread functions calculated for the areas, and
combines the respective second images corresponding to the areas and generates a third image corresponding to the first image,

in the calculation process, the point spread function of a first area is calculated using a refractive index distribution of each of areas included in an area group,
the first area is an area for which the point spread function is to be calculated, and
the area group is constituted of a plurality of areas inside a range in which light rays originating from the first area radiate in the predetermined direction, and includes an area outside a range defined by extending the first area in the predetermined direction.

2. The sample image generation device according to claim 1, wherein in the calculation process, the processor sets a point light source in the first area and calculates a point spread function of the first area using a first wavefront from a wave source of which is the set point light source.

3. The sample image generation device according to claim 2, wherein

in the calculation process, the processor
calculates a second wavefront, using the first wavefront and the refractive index distribution corresponding to each of the areas included in the area group, the second wavefront being a wavefront propagating through the sample in the predetermined direction,
calculates an intensity distribution corresponding to a third wavefront, using the calculated second wavefront, the third wavefront being a wavefront at a position of a focal plane of the virtual observation optical system, and
calculates a point spread function of the first area, using the calculated intensity distribution.

4. The sample image generation device according to claim 3, wherein

in the calculation process, the processor determines whether a wavefront propagating through the sample has reached an outer edge of the sample, in the predetermined direction, and
the second wavefront is a wavefront at a position where the wavefront is determined to have reached the outer edge.

5. The sample image generation device according to claim 3, wherein the second wavefront is a wavefront after passing through the sample and before reaching the virtual observation optical system.

6. The sample image generation device according to claim 1, wherein

in the second acquisition process, the processor acquires the refractive index distribution for each of small areas obtained by further dividing the divided area, and
in the calculation process, the processor

calculates point spread functions of the small areas, using the refractive index distribution of the small areas, and
calculates a point spread function of the area, using the point spread functions of the small areas.

7. The sample image generation device according to claim 1, wherein

the processor

performs a provisional calculation process of provisionally calculating respective point spread functions for the areas divided in the division process, and
performs the division process such that the area in which an intensity peak value of the provisionally calculated point spread function is less than 1/5 of a reference is set to be smaller than the area in which an intensity peak value of the provisionally calculated point spread function is equal to or greater than 1/5 of the reference, and

the reference is an intensity peak value of a point spread function when the sample is not present.

8. The sample image generation device according to claim 1, wherein

the processor performs an estimation process of estimating the sample, and
in the division process,
in a direction orthogonal to the predetermined direction,
a size of an area that is an area of the estimated sample and to which an outer edge of the estimated sample does not belong is set to be smaller than a size of an area that is not an area of the estimated sample and to which the outer edge of the estimated sample does not belong.

9. The sample image generation device according to claim 3, wherein
in the calculation process, the processor

calculates an excitation light intensity at a position of the set point light source,
calculates a fluorescence intensity distribution, using the calculated intensity distribution and the calculated excitation light intensity, and
calculates a point spread function of the first area, using the calculated fluorescence intensity distribution.

10. The sample image generation device according to claim 9, wherein in the calculation process, the processor calculates the excitation light intensity, using a refractive index distribution of an excitation light wavelength.

11. The sample image generation device according to claim 9, wherein

the first image is an image obtained by capturing an image with a device with a confocal pinhole, and
in the calculation process, the processor

calculates an intensity of light passing through the confocal pinhole, using the calculated intensity distribution,
calculates a fluorescence intensity, using the calculated excitation light intensity and the calculated intensity of light, and
calculates a point spread function of the first area, using the calculated fluorescence intensity.

12. The sample image generation device according to claim 3, wherein in the calculation process, the processor calculates the second wavefront using a beam propagation method.

13. A sample image generation system comprising:

an observation optical system configured to form an optical image of a sample;
an imager configured to capture the optical image; and
the sample image generation device according to claim 1.

14. A sample image generation system comprising a memory and a processor, wherein

a first image is an image obtained by capturing an image of a sample,
a predetermined direction in the first image is a direction in which a virtual observation optical system is present among optical axis directions of the virtual observation optical system,
the processor

performs a first acquisition process of acquiring the first image from the memory,
performs a division process of dividing the acquired first image into a plurality of areas,
performs a second acquisition process of acquiring a refractive index distribution of the sample from the memory,
performs a calculation process of calculating respective point spread functions for the divided areas, using the acquired refractive index distribution,
performs a first generation process of generating respective second images corresponding to the areas, using the respective point spread functions calculated for the areas, and
combines the respective second images corresponding to the areas and generates a third image corresponding to the first image,

in the calculation process, the point spread function of a first area is calculated using a refractive index distribution of each of areas included in an area group,
the first area is an area for which the point spread function is to be calculated,
the area group is constituted of a plurality of areas inside a range in which light rays originating from the first area radiate in the predetermined direction, and includes an area outside a range defined by extending the first area in the predetermined direction,
the processor performs a machine learning process to train an AI model,
in the machine learning process, the AI model is trained with a plurality of data sets,
the data sets include the first image and training data corresponding to the first image, and

the training data corresponding to the first image is the second images corresponding to the first image.

15. A sample image generation method using a first image and a refractive index distribution of a sample,

the first image being an image obtained by capturing an image of the sample,
a predetermined direction in the first image being a direction in which a virtual observation optical system is present among optical axis directions of the virtual observation optical system,
the sample image generation method comprising:

performing a first acquisition process of acquiring the first image from the memory;
performing a division process of dividing the acquired first image into a plurality of areas;
performing a second acquisition process of acquiring a refractive index distribution of the sample from the memory;
performing a calculation process of calculating respective point spread functions for the divided areas, using the acquired refractive index distribution;
performing a first generation process of generating respective second images corresponding to the areas, using the respective point spread functions calculated for the areas; and
combining the respective second images corresponding to the areas and generating a third image corresponding to the first image, wherein
in the calculation process,
the point spread function of a first area is calculated using a refractive index distribution of each of areas included in an area group,
the first area is an area for which the point spread function is to be calculated, and
the area group is constituted of a plurality of areas inside a range in which light rays originating from the first area radiate in the predetermined direction, and includes an area outside a range defined by extending the first area in the predetermined direction.

16. A computer-readable recording medium encoded with a program for generating a sample image,

a first image being an image obtained by capturing an image of a sample,
a predetermined direction in the first image being a direction in which a virtual observation optical system is present among optical axis directions of the virtual observation optical system,
the program causing a computer to perform processing comprising:

a first acquisition process of acquiring the first image from the memory;
a division process of dividing the acquired first image into a plurality of areas;
a second acquisition process of acquiring a refractive index distribution of the sample from the memory;
a calculation process of calculating respective point spread functions for the divided areas, using the acquired refractive index distribution;
a first generation process of generating respective second images corresponding to the areas, using the respective point spread functions calculated for the areas; and
a process of combining the respective second images corresponding to the areas and generating a third image corresponding to the first image, wherein
in the calculation process,
the point spread function of a first area is calculated using a refractive index distribution of each of areas included in an area group,
the first area is an area for which the point spread function is to be calculated, and
the area group is constituted of a plurality of areas inside a range in which light rays originating from the first area radiate in the predetermined direction, and includes an area outside a range defined by extending the first area in the predetermined direction.

# FIG. 1A

# FIG. 1B

# FIG. 1C

# FIG. 2A

# FIG. 2B

# FIG. 2C

# FIG. 2D

# FIG. 2E

# FIG. 3

```
        ( START )
             |
PERFORM FIRST ACQUISITION PROCESS     ⌐S10
             |
   PERFORM DIVISION PROCESS           ⌐S20
             |
PERFORM SECOND ACQUISITION PROCESS    ⌐S30
             |
  PERFORM CALCULATION PROCESS         ⌐S40
             |
PERFORM FIRST GENERATION PROCESS      ⌐S50
             |
     GENERATE THIRD IMAGE             ⌐S60
             |
         ( END )
```

# FIG. 4A

# FIG. 4B

# FIG. 4C

# FIG. 4D

# FIG. 5A

# FIG. 5B

# FIG. 5C

# FIG. 6A

# FIG. 6B

# FIG. 7A

# FIG. 7B

# FIG.8A

| DEG | PSF | REC |
|---|---|---|

DEG1     PSF1     REC1

DEG2     PSF2     REC2

DEG3     PSF3     REC3

DEG4     PSF4     REC4

DEG5     PSF5     REC5

DEG6     PSF6     REC6

# FIG.8B

80

120

X

Z

# FIG. 9A

X

Z

# FIG. 9B

X

Z

# FIG. 10

# FIG. 11A

90

140

141

X
Z

# FIG. 11B

141

142

X
Z

# FIG. 12A

# FIG. 12B

# FIG. 13A

# FIG. 13B

# FIG. 14

START

| m=1,n=1 | S100 |

SET FIRST AREA ARE(m,n) — S110

DETERMINE AREA GROUP — S120

OBTAIN REFRACTIVE INDEX DISTRIBUTION IN AREA GROUP — S130

SET POINT LIGHT SOURCE — S140

SET FIRST WAVEFRONT — S150

CALCULATE SECOND WAVEFRONT — S160

CALCULATE THIRD WAVEFRONT — S170

CALCULATE POINT SPREAD FUNCTION — S180

GENERATE PSF IMAGE PSF(m,n) — S190

ACQUIRE FIRST IMAGE PIC1(m,n) — S200

GENERATE SECOND IMAGE PIC2(m,n) — S210

S230

n=n+1   NO   n=Nn   S220

YES

S250

n=m+1   NO   m=Nm   S240

YES

GENERATE THIRD IMAGE — S260

END

# FIG. 15

# FIG. 16

# FIG. 17A

# FIG. 17B

# FIG. 17C

FIG. 18

**INTERNATIONAL SEARCH REPORT**

| International application No. |
|---|
| **PCT/JP2022/012406** |

**A. CLASSIFICATION OF SUBJECT MATTER**

*G01N 21/27*(2006.01)i; *G01N 21/64*(2006.01)i
FI: G01N21/27 A; G01N21/64 F

According to International Patent Classification (IPC) or to both national classification and IPC

**B. FIELDS SEARCHED**

Minimum documentation searched (classification system followed by classification symbols)

G01N21/00-G01N21/74; G01N15/00; G02B19/00-G02B21/00; G02B21/06-G02B36; G06T1/00; C12M1/00-C12M3/10; C12N1/00-C12N7/08; C12Q1/00-C12Q3/00;

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 2002-531840 A (YEDA RESEARCH AND DEVELOPMENT CO., LTD.) 24 September 2002 (2002-09-24) paragraphs [0016]-[0021], [0025]-[0036], fig. 1B-7 | 1-5, 12-13, 15-16 |
| A | | 6-11, 14 |
| A | JP 2012-237693 A (SONY CORP) 06 December 2012 (2012-12-06) entire text, all drawings | 1-16 |
| A | JP 2021-76575 A (TOMOCUBE INC) 20 May 2021 (2021-05-20) entire text, all drawings | 1-16 |
| A | WO 2015/178338 A1 (HAMAMATSU PHOTONICS KK) 26 November 2015 (2015-11-26) entire text, all drawings | 1-16 |
| A | US 2017/0205390 A1 (TECHNOLOGY INNOVATION MOMENTUM FUND (ISRAEL) LIMITED PARTNERSHIP) 20 July 2017 (2017-07-20) entire text, all drawings | 1-16 |

☑ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 May 2022** | **31 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2022/012406**

**C.    DOCUMENTS CONSIDERED TO BE RELEVANT**

| Category* | Citation of document, with indication, where appropriate, of the relevant passages | Relevant to claim No. |
|---|---|---|
| A | US 2019/0251330 A1 (NANOLIVE SA) 15 August 2019 (2019-08-15) entire text, all drawings | 1-16 |

Form PCT/ISA/210 (second sheet) (January 2015)

**INTERNATIONAL SEARCH REPORT**
Information on patent family members

International application No.

**PCT/JP2022/012406**

| Patent document cited in search report | | | Publication date (day/month/year) | Patent family member(s) | | | Publication date (day/month/year) |
|---|---|---|---|---|---|---|---|
| JP | 2002-531840 | A | 24 September 2002 | US | 6658142 | B1 | |
| | | | | column 4, line 45 to column 6, line 28, column 17, line 31 to column 10, line 59, fig. 1B-7 | | | |
| | | | | WO | 2000/033250 | A2 | |
| | | | | EP | 1135746 | A2 | |
| | | | | CA | 2353543 | A | |
| JP | 2012-237693 | A | 06 December 2012 | US | 2012/0288157 | A1 | |
| | | | | entire text, all drawings | | | |
| | | | | CN | 102866495 | A | |
| JP | 2021-76575 | A | 20 May 2021 | US | 2021/0134054 | A1 | |
| | | | | entire text, all drawings | | | |
| | | | | WO | 2021/091027 | A1 | |
| | | | | EP | 3819874 | A1 | |
| | | | | KR | 10-2021-0054183 | A | |
| | | | | CN | 112782165 | A | |
| WO | 2015/178338 | A1 | 26 November 2015 | JP | 2015-219501 | A | |
| | | | | entire text, all drawings | | | |
| | | | | US | 2017/0089837 | A1 | |
| | | | | CN | 106415354 | A | |
| US | 2017/0205390 | A1 | 20 July 2017 | WO | 2016/178234 | A1 | |
| | | | | entire text, all drawings | | | |
| | | | | EP | 3292406 | A1 | |
| | | | | CN | 107615066 | A | |
| US | 2019/0251330 | A1 | 15 August 2019 | WO | 2017/216123 | A1 | |
| | | | | entire text, all drawings | | | |
| | | | | EP | 3469515 | A1 | |
| | | | | CN | 109564617 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SREYA GHOSH** ; **CHRYSANTHE PREZA**. Three-dimensional block-based restoration integrated with wide-field fluorescence microscopy for the investigation of thick specimens with spatially variant refractive index. *J. of Biomedical Optics*, 2016, vol. 21 (4), 046010

- High-resolution 3D refractive index microscopy of multiple-scattering samples from intensity images. *Optica*, 2019, vol. 6 (9), 1211-1219